# EUROPÄISCHE PATENTSCHRIFT

(11) **EP 0 562 051 B1**
(45) Veröffentlichungstag und Bekanntmachung des Hinweises auf die Patenterteilung: **11.03.1998**
(21) Anmeldenummer: 92907379.9
(22) Anmeldetag: 02.04.1992
(51) Int. Cl.: C09K 19/02, C09K 19/42, C09K 19/46

(54) **SUPERTWIST-FLÜSSIGKRISTALLANZEIGE**
SUPERTWIST LIQUID CRYSTAL DISPLAY
AFFICHAGE A CRISTAUX LIQUIDES DU TYPE SUPER-TORSADES

(30) Priorität: 12.04.1991 EP 91105818; 18.06.1991 DE 4119999
(43) Veröffentlichungstag der Anmeldung: 29.09.1993
(73) Patentinhaber: MERCK PATENT GmbH, D-64271 Darmstadt (DE)
(72) Erfinder: WEBER, Georg, D-6106 Erzhausen (DE); SCHMIDT, Martina, D-6115 Münster 2 (DE); ZIMMERMANN, Dagmar, D-6080 Gross-Gerau (DE); RÜGER, Joachim, D-6100 Darmstadt (DE); RIEGER, Bernhard, Wacore-Tamagawagakuen, Yokohama-shi, Kanagawa-pref. 227 (JP); HITTICH, Reinhard, D-6101 Modautal 1 (DE); REIFFENRATH, Volker, D-6101 Rossdorf (DE); COATES, David, Wimborne, Dorset BH21 3SW (GB)
(86) Internationale Anmeldenummer: EP9200734
(87) Internationale Veröffentlichungsnummer: WO9218583

(56) Entgegenhaltungen:
- EP-A- 0 365 962
- EP-A- 0 414 048
- WO-A-91/00898

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 Bl; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters er al. (C.M. Waters et al., Proc. Scc. Inf. Disp. (New York) (1985) (3rd Intern. Display Conference, Kobe, Japan), die STN-LCD'S (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Heutzutage ist eine der attraktivsten Anwendungenfür hochauflösende SFA der sogenannte "Note Book PC". Gewöhnlich wird hierzu eine B/W-VGA-Anzeige verwendet.

In den meisten Fällen liegt die Verdrillung bei 240°, der Tiltwinkel zwischen 5° und 7°, und das Display wird mit einem Multiplex-Verhältnis von 1:240 betrieben.

Jedoch eine der bedeutendsten Erfordernisse ist die Verbesserung der Schaltzeiten bei hohen Multiplex-Werten. Um eine PC-Maus geeignet verwenden zu können, darf die Summenschaltzeit (T(on) + T(off) nicht größer als 250 ms sein.

Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Ähnliche Flussigkristallmischungen sind beschrieben (z. B. JP 60 51 778 und EP-0 232 052), jedoch sind diese Mischungen für SFA's aufgrund der geringen Steilheit ihrer elektrooptischen Kennlinie weniger geeignet.

Zur Erzielung einer steilen elektrooptischen Kennlinie sollen die Flüssigkristallmischungen relativ große Werte für K3/K1 und relativ kleine Werte für Δε/ε⊥ aufweisen.

Über die Optimierung des Kontrastes und der Schaltzeiten hinaus werden an derartige Mischungen weitere wichtige Anforderungen gestellt:
1. Breites d/p-Fenster
2. Hohe chemische Dauerstabilität
3. Hoher elektrischer Widerstand
4. Geringe Frequenzabhängigkeit der Schwellenspannung.

Die erzielten Parameterkombinationen sind bei weitem noch nicht ausreichend, insbesondere für Hochmultiplex-STN (1/400). Zum Teil ist dies darauf zurückzuführen, daß die verschiedenen Anforderungen durch Materialparameter gegenläufig beeinflußt werden.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den oben angegebenen Anforderungen gerecht werden.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn die nematische Flüssigkristallmischung
a) auf Komponente A basiert, welche eine oder mehrere Verbindungen der Formeln I: 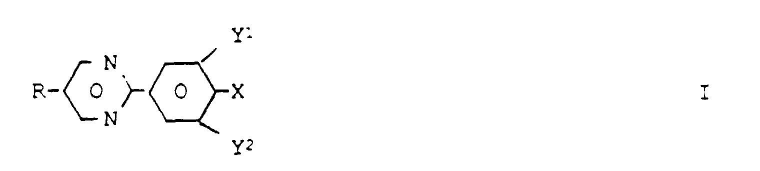 eine oder mehrere Verbindungen der Formeln II bis IV: 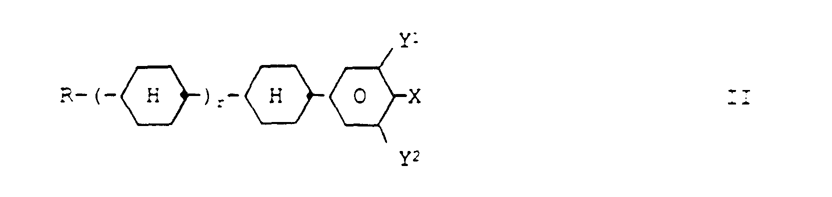 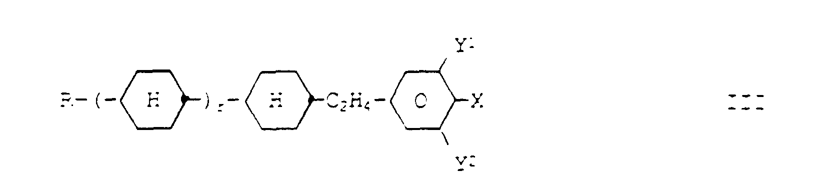 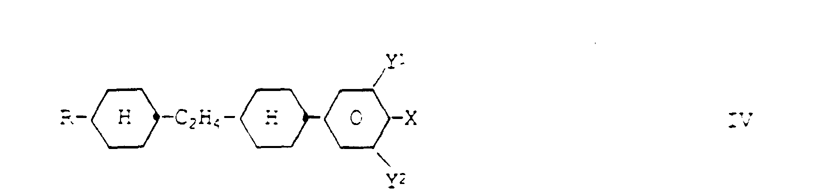 worin die einzelnen Reste die folgenden Bedeutungen haben:
   - R:: Alkyl, Oxaalkyl, geradkettiges Fluoralkyl der Formel -CₙH₂ₙF oder Alkenyl mit jeweils bis zu 7 C-Atomen,
   - X:: F, Cl, CF₃, CHF₂, OCF₃, OCHF₂, -OCF₂CF₂H oder OC₂F₅, im Falle der Verbindungen der Formel I vorzugsweise F oder CF3,
   - Y¹ und Y²: jeweils unabhängig voneinander H oder F, im Falle der Verbindungen der Formel I vorzugsweise H,
   - r: 0 oder 1,
   enthält;
b) 0-40 Gew% einer flüssigkristallinen Komponente B, bestehend aus einer oder mehreren Verbindungen mit einer dielektrischen Anisotropie von -1,5 bis +1,5 der allgemeinen Formel IX, 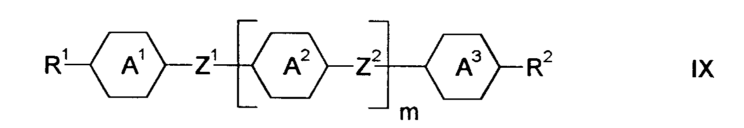 enthält,
   worin
   - R¹ und R²: jeweils unabhängig voneinander n-Alkyl, n-Alkoxy, n-Oxaalkyl, geradkettiges Fluoralkyl der Formel-CₙH₂ₙF oder n-Alkenyl mit bis zu 9 C-Atomen,
   - A¹, A² und A³: jeweils unabhängig voneinander 1,4-Phenylen, 2-oder 3-Fluor-1,4-phenylen, trans-1,4-Cyclohexylen oder 1,4-Cyclohexenylen,
   - Z¹ und Z²: jeweils unabhängig voneinander -CH₂CH₂-, -C≡C- oder eine Einfachbindung, und
   - m: 0,1 oder 2,
   bedeuten,
c) 0-20 Gew% einer flüssigkristallinen Komponente C, bestehend aus einer oder mehreren Verbindungen mit einer dielektrischen Anisotropie von unter -1,5, die das Strukturelement 2,3-Difluorphenylen aufweisen, enthält, und
d) eine optisch aktive Komponente D in einer Menge enthält, daß das Verhältnis zwischen der Schichtdicke (Abstand der planparallelen Trägerplatten) und der natürlichen Ganghöhe der chiralen nematischen Flüssigkristallmischung etwa 0,2 bis 1,7, insbesondere etwa 0,2 bis 1,3 beträgt,
und die nematische Flüssigkristallmischung einen nematischen Phasenbereich von mindestens 60°C, eine Viskosität von nicht mehr als 35mPa·s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20°C bezogen sind,
dadurch gekennzeichnet, daß die nematische Flüssigkristallmischung 0 bis 5% an flüssigkristallinen Verbindungen, welche Cyanogruppen tragen, enthält.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung

a) auf Komponente A basiert, welche eine oder mehrere Verbindungen der Formeln I: 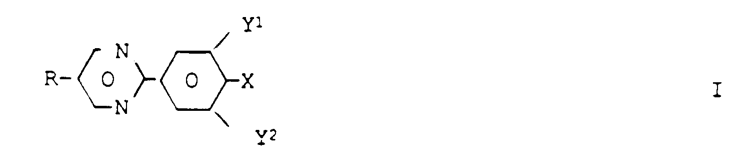 eine oder mehrere Verbindungen der Formeln II bis IV: 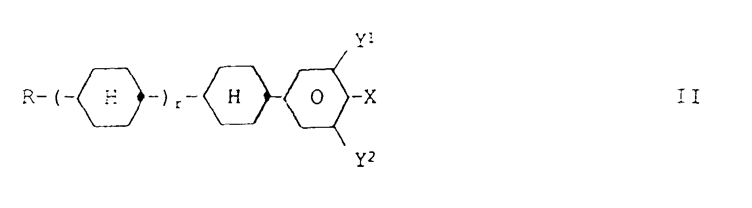 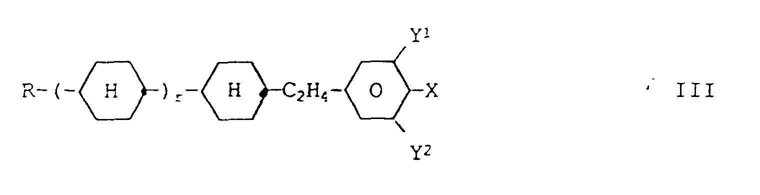 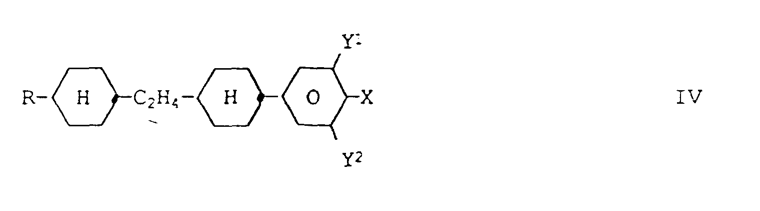 worin die einzelnen Reste die folgenden Bedeutungen haben:
   - R:: Alkyl, Oxaalkyl, geradkettiges Fluoralkyl der Formel - CₙH₂ₙF oder Alkenyl mit jeweils bis zu 7 C-Atomen,
   - X:: F, Cl, CF₃, CHF₂, OCF₃, OCHF₂, -OCF₂CF₂H oder OC₂F₅,
   - Y¹ und Y²: jeweils unabhängig voneinander H oder F,
   - r: 0 oder 1,
   enthält;
b) 0-40 Gew% einer flüssigkristallinen Komponente B, bestehend aus einer oder mehreren Verbindungen mit einer dielektrischen Anisotropie von -1,5 bis +1,5 der allgemeinen Formel IX, 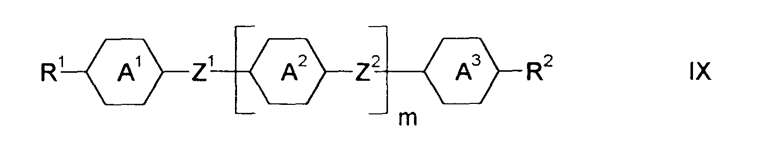 enthält,
   worin
   - R¹ und R²: jeweils unabhängig voneinander n-Alkyl, n-Alkoxy, n-Oxaalkyl, geradkettiges Fluoralkyl der Formel -CₙH₂ₙF oder n-Alkenyl mit bis zu 9 C-Atomen,
   - A¹, A² und A³: jeweils unabhängig voneinander 1,4-Phenylen, 2-oder 3-Fluor-1,4-phenylen, trans-1,4-Cyclohexylen oder 1,4-Cyclohexenylen,
   - Z¹ und Z²: jeweils unabhängig voneinander -CH₂CH₂-, -C≡C- oder eine Einfachbindung, und
   - m: 0,1 oder 2,
   bedeuten,
c) 0-20 Gew% einer flüssigkristallinen Komponente C, bestehend aus einer oder mehreren Verbindungen mit einer dielektrischen Anisotropie von unter -1,5, die das Strukturelement 2,3-Difluorphenylen aufweisen, enthält, und
d) eine optisch aktive Komponente D in einer Menge enthält, daß das Verhältnis zwischen der Schichtdicke (Abstand der planparallelen Platten) und der natürlichen Ganghöhe der chiralen nematischen Flüssigkristallmischung etwa 0,2 bis 1,7, insbesondere etwa 0,2 bis 1,3 beträgt,
und die nematische Flüssigkristallmischung einen nematischen Phasenbereich von mindestens 60°C, eine Viskosität von nicht mehr als 35mPa-s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20°C bezogen sind,
dadurch gekennzeichnet, daß die nematische Flüssigkristallmischung 0 bis 5% an flüssigkristallinen Verbindungen, welche Cyanogruppen tragen, enthält.

Gegenstand der Erfindung sind auch entsprechende Flüssigkristallmischungen zur Verwendung in SFA.

Die einzelnen Verbindungen z.B. der Formeln I bis IX oder auch andere Verbindungen, die in den erfindungsgemäßen SFA verwendet werden können, sind entweder bekannt, oder sie können analog zu den bekannten Verbindungen hergestellt werden.

In einer bevorzugten Ausüfhrungsform enthalten die erfindungsgemäßen Flüssigkristallmischungen zusätzlich eine oder mehrere Verbindungen ausgewählt aus der Gruppe bestehend aus den allgemeinen Formeln V bis VIII : 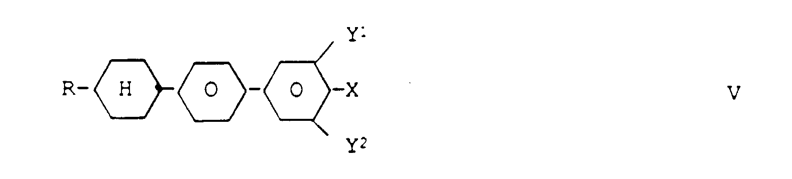 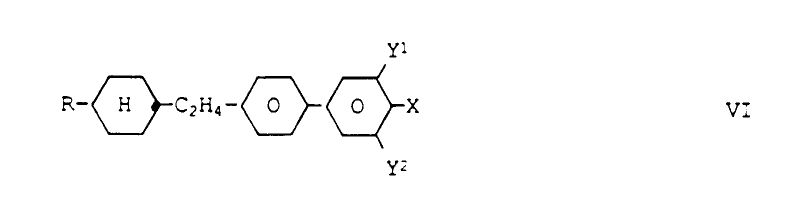 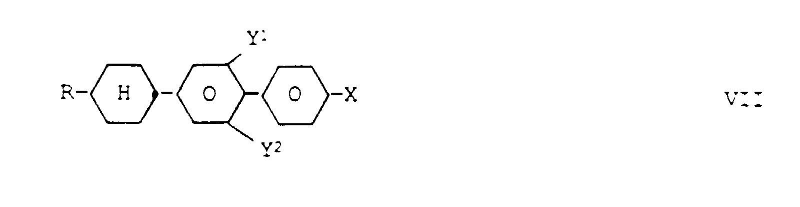 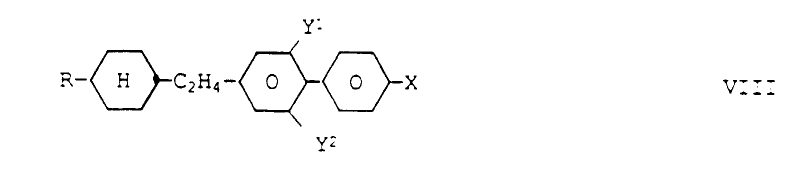 worin R, r, X, Y¹ und Y² jeweils unabhängig voneinander eine der für Formel II bis IV angegebene Bedeutung besitzen.

Weiterhin enthält das Medium vorzugsweise eine oder mehrere Verbindungen ausgewählt aus der Gruppe bestehend aus den allgemeinen Formeln X bis XV: 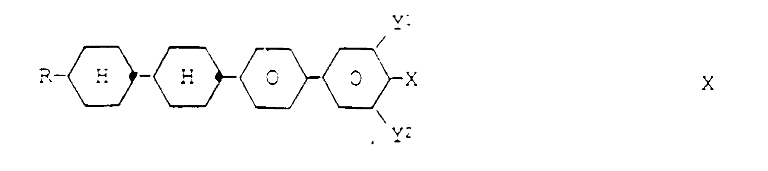 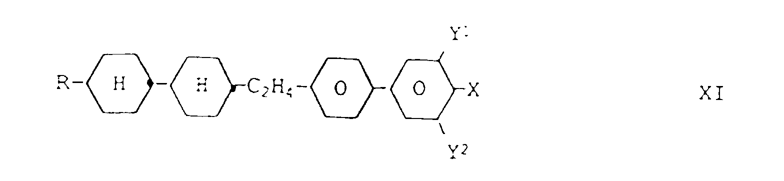 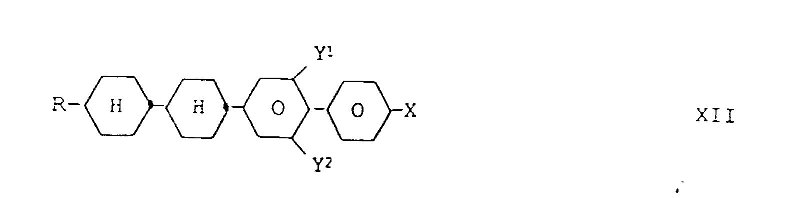 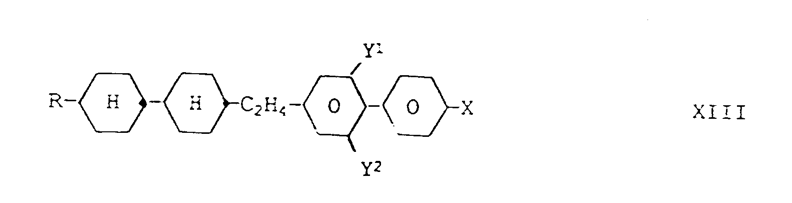 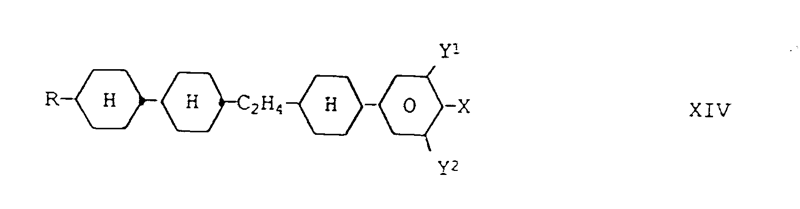 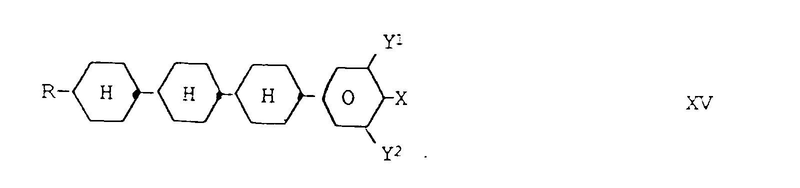 worin R, X, Y¹ und Y² jeweils unabhängig voneinhander eine der in Anspruch 1 angegebenen Bedeutungen haben.
- Der Anteil an Verbindungen der Formeln I bis IV zusammen beträgt im Gesamtgemisch mindestens 50 Gew.-%
- der Anteil an Verbindungen der Formel I beträgt im Gesamtgemisch 10 bis 50 Gew.-%
- der Anteil an Verbindungen der Formeln II bis IV im Gesamtgemisch beträgt 30 bis 70 Gew.-% 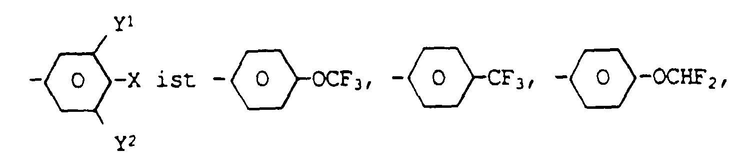 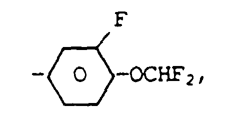 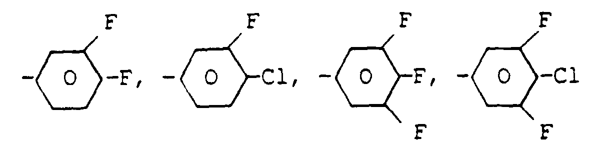 oder 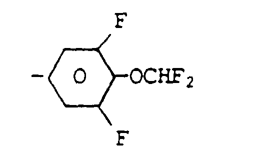
- das Medium enthält Verbindungen der Formeln II und III oder IV
- R ist geradkettiges Alkyl oder Alkenyl mit 2 bis 7 C-Atomen
- das Medium besteht im wesentlichen aus Verbindungen der Formeln I bis IV
- das Medium enthält weitere Verbindungen, vorzugsweise ausgewählt aus der folgenden Gruppe: 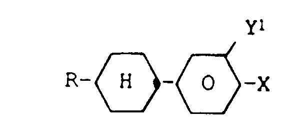 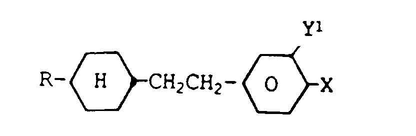
- Das Gewichtsverhältnis I: (II + III + IV) ist vorzugsweise 1 : 4 bis 1 : 1.
- Medium besteht im wesentlichen aus aus Verbindungen ausgewählt aus der Gruppe bestehend aus den allgemeinen Formeln I bis XV.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III und/oder IV zu einer beträchtlichen Verbesserung der Ansprechzeiten und zu niedrigen Schwellenspannungen führt, wobei gleichzeitig breite nematische Phasen mit tiefen Übergangstemperaturen smektischnematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, lE-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R, X, Y¹ und Y² können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k33 (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Eine Gruppe -CH₂CH₂- in Z¹ bzw. Z² führt im allgemeinen zu höheren Werte von k₃₃/k₁₁ im Vergleich zu einer einfachen Kovalenzbindung. Höhere Werte von k₃₃/k₁₁ ermöglichen steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XIV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XIV ist.

In einer besonders bevorzugten Ausführungsform enthalten die erfindungsgemäßen Medien Verbindungen der Formel II, III, V und/oder VII (vorzugsweise II und/oder III), worin X CF₃, OCF₃ oder OCHF₂ bedeutet. Eine günstige synergistische Wirkung mit den Verbindungen der Formel I führt zu besonders vorteilhaften Eigenschaften.

Für SFA-Anwendungen enthalten die Medien vorzugsweise Verbindungen ausgewählt aus der Gruppe bestehend aus den Formeln V bis VIII, worin X vorzugsweise OCHF₂ bedeutet.

Messungen des "Capacity Holding-ration" (HR) S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)haben ergeben, daß erfindungsgemäße Mischungen enthaltend Verbindungen der Formel I eine deutlich kleinere Abnahme des HR mit steigender Temperatur aufweisen als analoge Mischungen enthaltend anstelie den Verbindungen der Formel I Cyanophenylcyclohexane der Formel

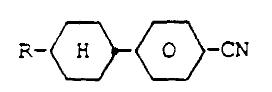

Auch die UV-Stabilität der erfindungegemäßen Mischungen ist erheblich besser, d. h. sie zeigen eine deutlich kleinere Abnahme des HR unter UV-Belastung.

Die erfindungsgemäßen Medien zeichnen sich neben ungewöhnlich weitem nematischen Phasenbereich auch durch außerordentlich hohe elastische Konstanten bei sehr günstigen Viskositätswerten aus, wodurch insbesondere bei Verwendung in STN-Anzeigen deutlich Vorteile gegenüber Medien aus dem Stand der Technik resultieren.

Vorzugsweise basieren die erfindungsgemäßen Medien auf mehreren (vorzugsweise zwei oder mehr) Verbindungen der Formel I, d.h. der Anteil dieser Verbindungen ist ≥ 25 %, vorzugsweise ≥ 40 %.

Die erfindungsgemäßen Medien enthalten demzufolge nur geringe Anteile an Verbindungen, welche Cyanogruppen tragen, vorzugsweise enthalten sie 0-5, insbesondere 0,5-5 % dieser Verbindungen. In einer besonders bevorzugten Ausführungsform sind die erfindungsgemäßen Medien frei von Cyanogruppen tragenden flüssigkristallinen Medien.

Bevorzugte Flüssigkristallmischungen enthalten
a) mindestens eine Komponente, ausgewählt aus der Gruppe B4, bestehend aus Verbindungen der Formeln AI bis AVI, 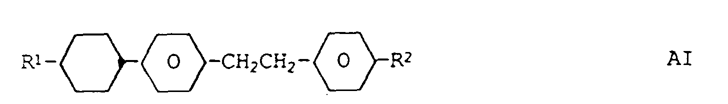 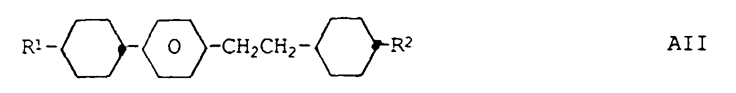 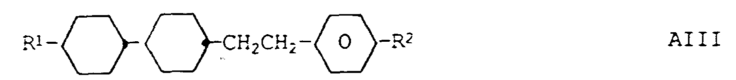 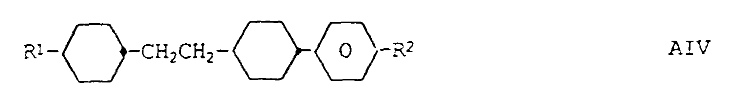 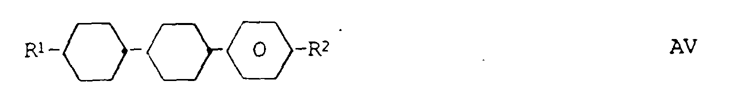 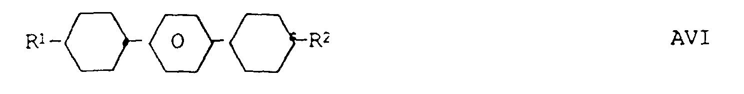 worin R¹ und R² jeweils unabhängig voneinander jeweils R bedeuten und
   - R: Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
b) und/oder mindestens eine Komponente, ausgewählt aus der Gruppe B1, bestehend aus den Verbindungen der Formeln BIII und BIV, 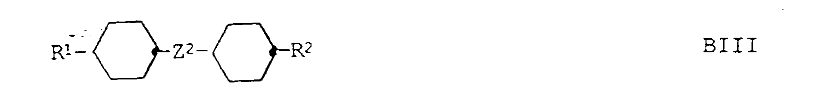 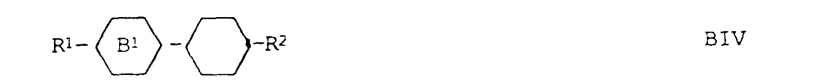 worin R¹ und R² jeweils unabhängig voneinander die für R angegebene Bedeutung haben, Z² -CH₂CH₂-, oder eine Einfachbindung, und 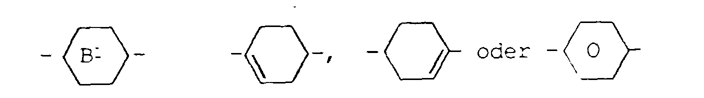 bedeutet,
und/oder mindestens eine Komponente, ausgewählt aus der Gruppe B2, bestehend aus den Verbindungen der Formeln BVI und BVII, 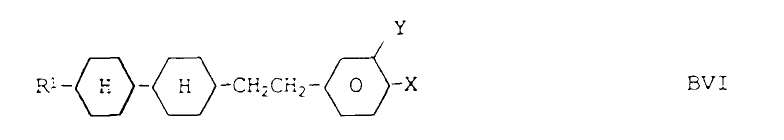 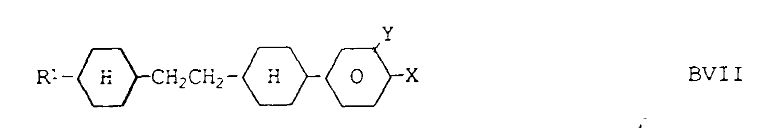 worin R¹ die für R angegebene Bedeutung hat.

Besonders bevorzugte Verbindungen der Formel BIII sind diejenigen der folgenden Teilformeln, 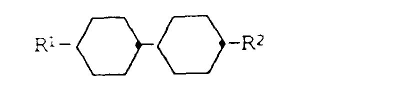 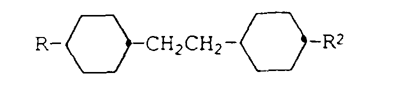 worin
- R¹: CH₃- (CH₂)ₙ-O-, CH₃-(CH₂)ₜ-, trans-H-(CH₂)ᵣ-CH=CH-(CH₂CH₂)ₛ-CH₂O- oder trans-H-(CH₂)ᵣ-CH=CH- (CH₂CH₂)ₛ-,
- R²: CH₃-(CH₂)ₜ-
- n: 1, 2, 3 oder 4
- r: 0, 1, 2 oder 3
- s: 0 oder 1, und
- t: 1, 2, 3 oder 4 ist.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel, 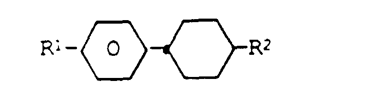 worin
- R¹: CH₃-(CH₂)ₙ-O- oder trans-H-(CH₂)ᵣ0-CH=CH- (CH₂CH₂)₅-CH₂O- und R² CH₃-(CH₂)ₜ- ist, wobei
- n: 1, 2, 3 oder 4,
- r: 0, 1, 2 oder 3,
- s: 0 oder 1, und
- t: 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel BIII, insbesondere solche der Teilformel

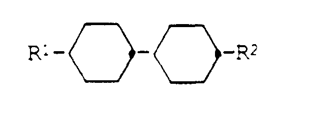

In einer besonders bevorzugten Ausführungsform enthalten die Mischungen gleichzeitig Verbindungen der Formeln BIII und BIV, wobei der Gesamtanteil für Komponenten der Gruppe Bl gewahrt bleibt.

Falls Verbindungen der Formeln BIII vorhanden sind, bedeuten R¹ und R² vorzugsweise jeweils unabhängig voneinander n-Alkyl mit 1 bis 7 C-Atomen oder (trans)-n-Alkenyl mit 3 bis 7 C-Atomen. Z² ist vorzugsweise eine Einfachbindung.

Ferner bevorzugt sind erfindungsgemäße Mischungen, die einer oder mehrere Verbindungen der Formel BIV enthalten, worin 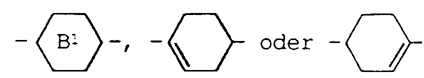 bedeutet und R¹ und R² eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 bis 45 %, insbesondere bevorzugt 5 % bis 20 %. Der Anteil (bevorzugte Bereiche) für BVI und BVII ist wie folgt:
- Summe BVI und BVII:: ca. 5 % bis 25 %, vorzugsweise ca. 10 % bis 20 %.

In einer besonders bevorzugten Ausführungsform enthalten die erfindungsgemäßen Mischungen weitere terminal fluorierte Verbindungen zum Beispiel ausgewählt aus der Gruppe bestehend aus, 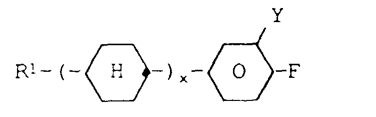 und/oder polare Heterocyclen ausgewählt aus der Gruppe bestehend aus 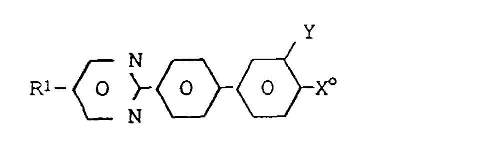 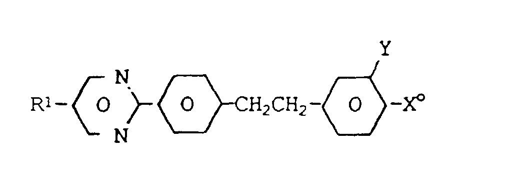 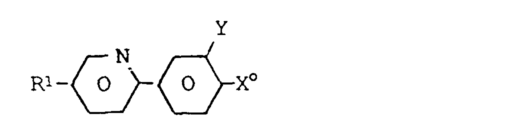 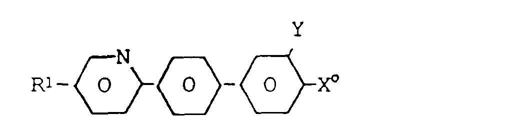 worin R¹ vorzugsweise n-Alkyl mit bis 7 C-Atomen oder (trans)-n-Alkenyl mit 3 bis 7 C-Atomen, x 1 oder 2, X° F, Cl, CF₃, -OCF₃ oder -OCHF₃, und Y H oder F bedeutet.

Der Gesamtanteil aller terminal fluorierter Verbindungen beträgt vorzugsweise ca. 5 % bis 65 %, insbesondere ca. 15 % bis 40 %.

Die erfindungsgemäßen Mischungen enthalten Verbindungen aus mindestens einer der Gruppen B1, und B2 Vorzugsweise enthalten sie eine oder mehrere Verbindungen aus Gruppe B1 und eine oder mehrere Verbindungen aus Gruppe B2.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente C). Derartige Verbindungen sind bekannt, z.B Cyclohexanderivate mit dem Strukturelement 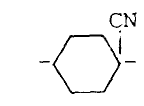 gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCE/DE 88/00133, insbesondere solche der Formeln, 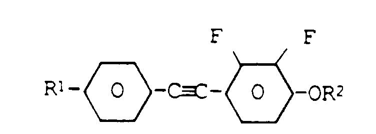 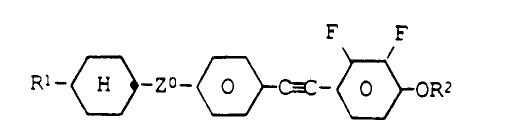 worin R¹ und R² jeweils unabhängig voneinander vorzugsweise n-Alkyl mit 1 bis 7 C-Atomen oder n-Alkenyl mit 3 bis 7 C-Atomen bedeuten und Z⁰ -CH₂CH₂- oder eine Einfachbindung ist, und Phenylpyrimidin der Formel 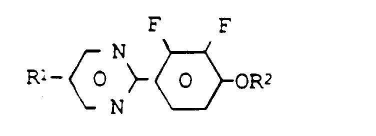 entsprechend DE-OS 38 07 871.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane der Formeln T1 und T2 sind im folgenden angegeben: 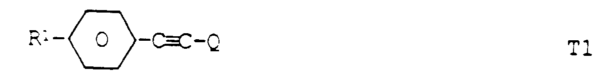 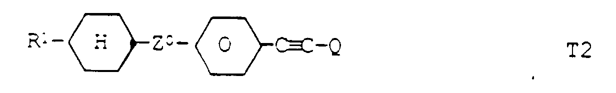
- R¹: ist vorzugsweise n-Alkyl oder n-Alkoxy mit 1 bis 7 C-Atomen,
- Z⁰: ist -CH₂CH₂- oder eine Einfachbindung,
- Q: ist 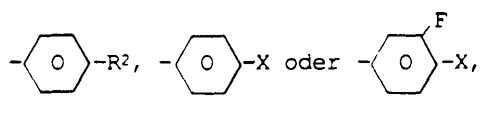 wobei
- X: ist F, Cl oder OCF₃, wobei
- R²: n-Alkyl oder n-Alkoxy mit jeweils 1 bis 7 C-Atomen oder n-Alkenyl oder n-Alkenyloxy mit jeweils 3 bis 7 C-Atomen bedeutet.

Im folgenden weitere besonders bevorzugten Ausführungsformen:

Die Komponente A enthält eine oder mehrere, vorzugsweise 2, 3 oder 4, Verbindungen der Formel I, insbesondere worin R n-Alkyl mit 1 bis 8, vorzugsweise 1 bis 5 C-Atomen bedeutet und/oder eine oder mehrere, vorzugsweise 1, 2 oder 3 Verbindungen der Formel II, insbesondere worin r O, Y¹ und Y² H und X F bedeuten, insbesondere worin R Alkyl mit 1 bis 5 C-Atomen bedeuten.

Weiterhin enthält die Komponente A eine oder mehrere, vorzugsweise 2, 3 oder 4, Verbindungen der Formel II, insbeson dere worin r 1, Y¹ und Y² H, L X OCF₃ und R n-Alkyl mit 1 bis 8, vorzugsweise 1 bis 5 C-Atomen bedeuten.

Weiterhin enthält die Komponente A eine oder mehrere, vorzugsweise 2, 3 oder 4 Verbindungen der Formel III, insbesondere worin r 1, Y¹ und Y² H, X OCF₃ und R n-Alkyl mit 1 bis 8, vorzugsweise 1 bis 5 C-Atomen bzw. worin r 1, Y¹ F, Y² H, X F bedeuten.

Weiterhin enthält die Komponente A vorzugsweise neben einer oder mehreren Verbindungen der Formel III eine oder mehrere, vorzugsweise 1, 2 oder 3, Verbidnungen der Formel IV, insbesondere worin Y¹ und Y² H bedeuten oder OCF₃ bedeutet.

Der Anteil der Verbindungen der Formeln I bezogen auf die Komponente A beträgt 10 bis 40 %, vorzugsweise 15 bis 30, insbesondere 20 bis 25 Gew.%.

Der Anteil der Verbindungen der Formel II bezogen auf die Komponente A beträgt 20 bis 60, vorzugsweise 25 bis 45, insbesondere 30 bis 35, Gew.%.

Der Anteil der Verbindungen der Formeln III und IV beträgt 25 bis 70, vorzugsweise 35 bis 60, insbesondere 40 bis 50 Gew.%.

Insbesondere bevorzugt sind solche Flüssigkristallmischungen, die neben den bevorzugten Verbindungen der Komponente A eine oder mehrere Verbindungen ausgewählt aus den Verbindungen der folgenden Formein enthalten, 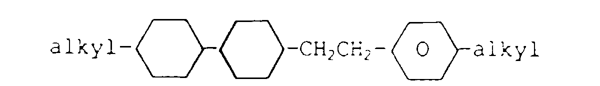 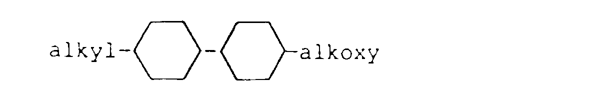 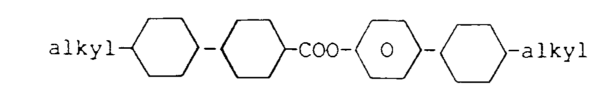 wobei alkyl und alkoxy jeweils n-Alkyl oder n-Alkoxy mit 1 bis 8 C-Atomen bedeutet.
- Komponente A enthält eine oder mehrere Verbindungen der Formeln IIa-IIf, IIIa-IIIc und/oder IVa-IVc, 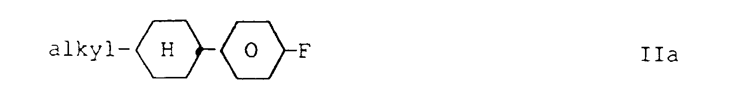 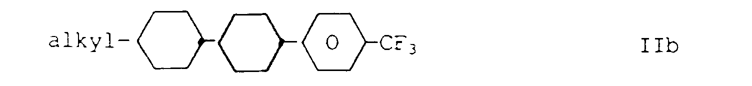 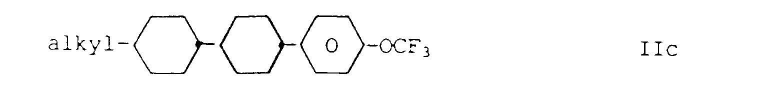 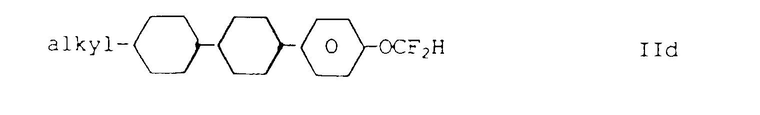 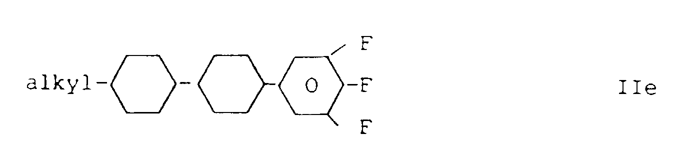 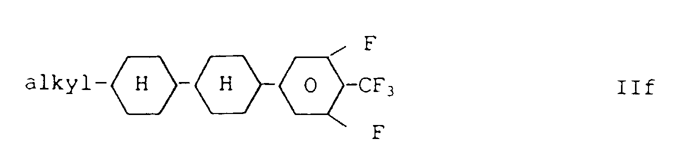 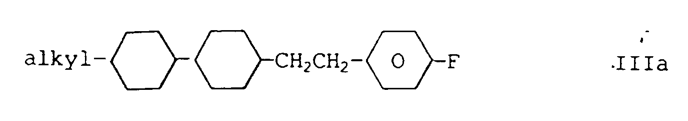 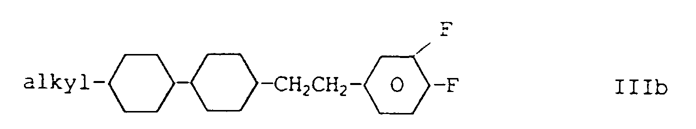 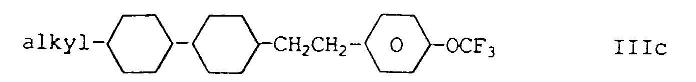 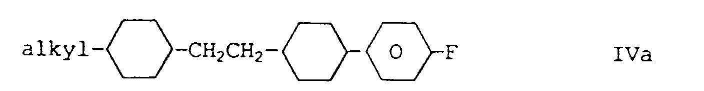 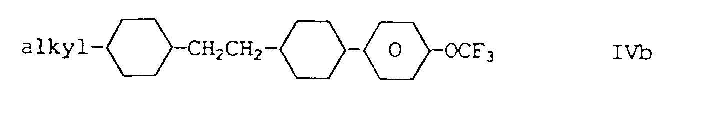 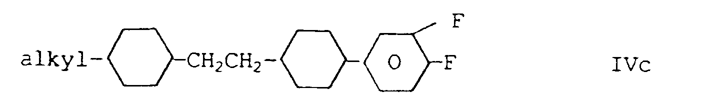 worin alkyl n-Alkyl mit 1 bis 9 C-Atomen bedeutet.
- X bedeutet F, Cl, CF₃, -OCF₃, OCHF₂ oder CHF₂.
- Komponente B enthält eine oder mehrere Verbindungen ausgewählt aus der Gruppe bestehend aus IX1 bis IX7 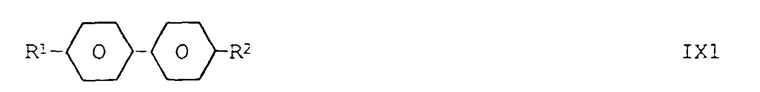 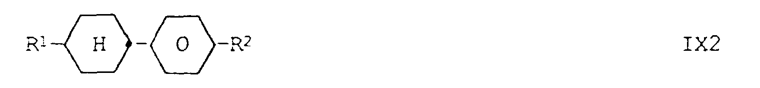 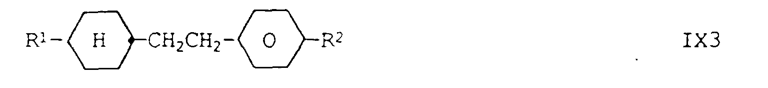 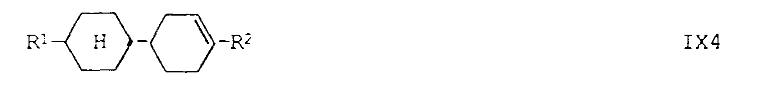 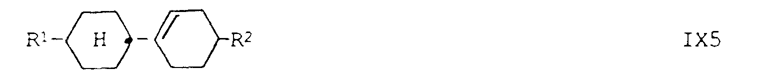 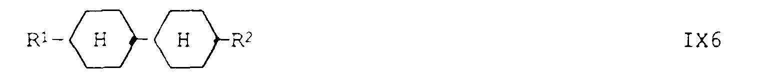 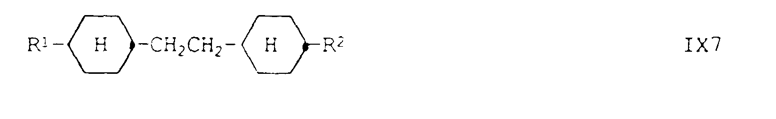 worin R¹ und R² die für Formel IX angegebene Bedeutung haben.
- Komponente B enthält zusätzlich eine oder mehrere Verbindungen ausgewählt aus der Gruppe bestehend aus IX9 bis IX22, 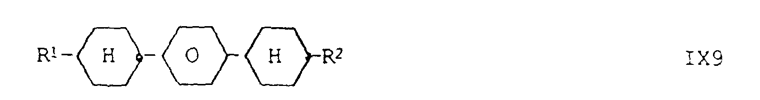 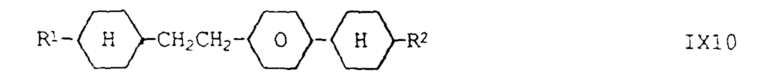 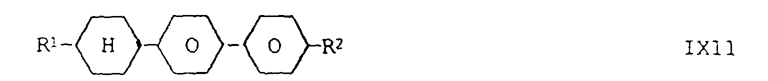 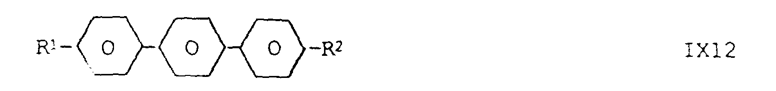 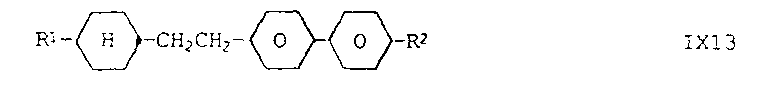 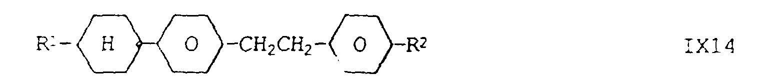 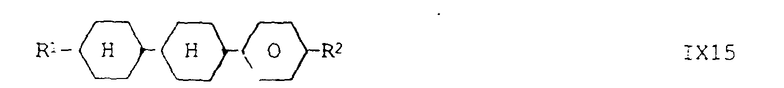 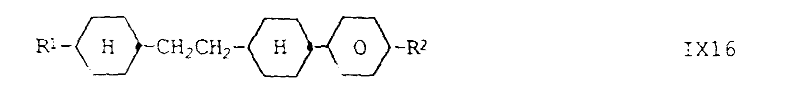 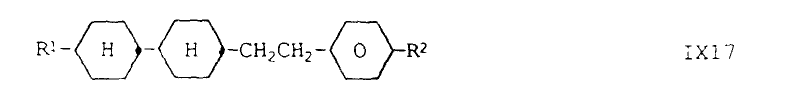 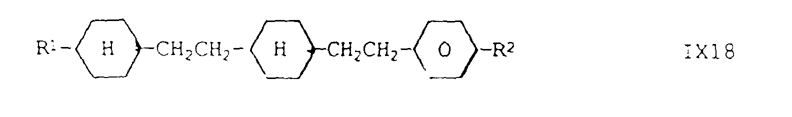 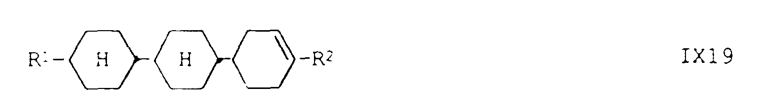 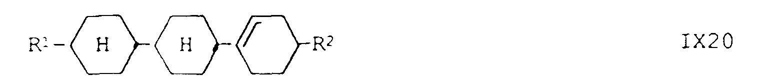 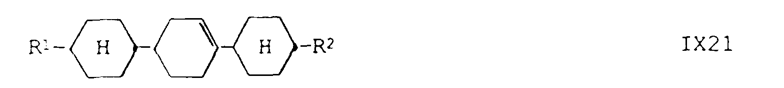 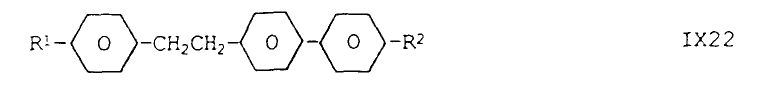 worin R¹ und R² die für Formel IX angegebene Bedeutung haben und die 1,4-Phenylengruppen in IX9 bis IX18 und IX22 jeweils unabhängig voneinander auch durch Fluor ein- oder mehrfach substituiert sein können.
- Komponente B enthält zusätzlich eine oder mehrere Verbindungen ausgewählt aus der Gruppe bestehend aus IX23 bis IX27 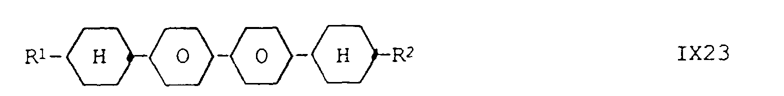 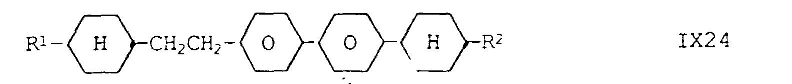 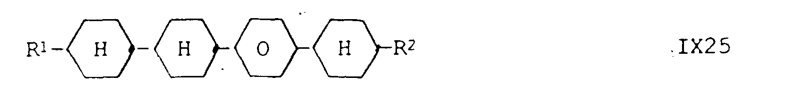 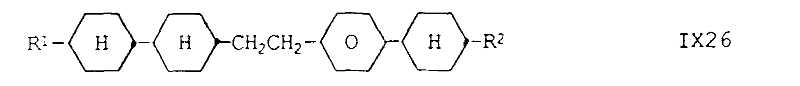 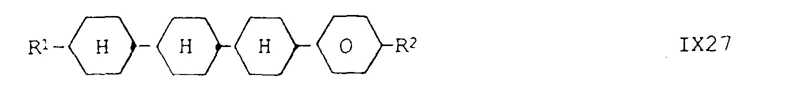 worin R¹ und R² die für Formel IX angegebene Bedeutung haben und die 1,4-Phenylengruppen in IX23 bis IX27 jeweils unabhängig voneinander auch durch Fluor ein- oder mehrfach substituiert sein können.
- Komponente B enthält eine oder mehrere Verbindungen ausgewählt aus der Gruppe bestehend aus IX29 und IX30: 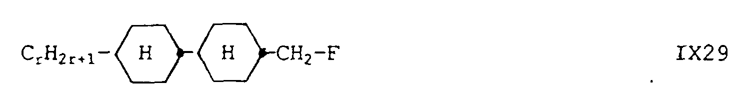 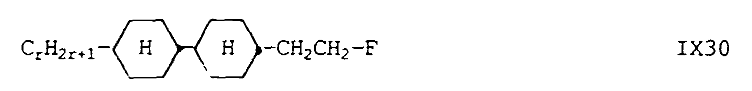 worin CᵣH₂ᵣ₊₁ eine geradkettige Alkylgruppe mit bis zu 7 C-Atomen ist.
- Die Flüssigkristallmischung enthält neben den Komponenten A, B und C zusätzlich eine oder mehrere Verbindungen ausgewählt aus der Gruppe bestehend aus XVI und XVII 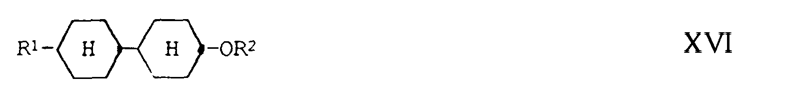 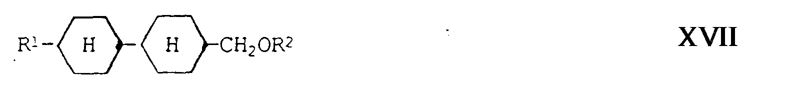 worin R¹ und R² die für Formel IX angegebene Bedeutung haben.
- Die Flüssigkristallmischung enthält neben den Komponenten A, B und C zusätzlich eine oder mehrere Verbindungen ausgewählt aus der Gruppe bestehend aus XVIII und XIX 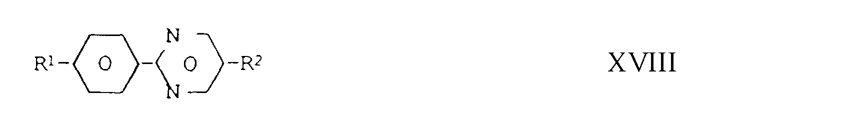 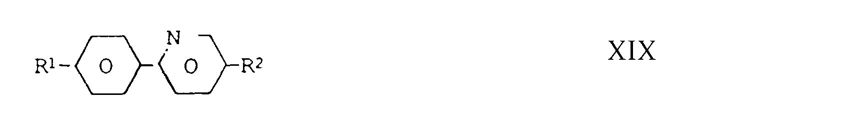 worin R¹ und R² die für Formel IX angegebene Bedeutung haben.
   In einer besonders bevorzugten Ausführungsform enthält das Medium eine oder mehrere, vorzugsweise 2, 3 oder 4 Verbindungen der Formel XII, insbesondere worin R¹ und R² jeweils n-Alkyl mit 1 bis 8 C-Atomen, vorzugsweise 1 bis 5 C-Atomen bedeuten. Insbesondere beträgt die Summe der C-Atome der beiden Reste R¹ und R2 der Verbindung der Formel XII 4 bis 8, insbesondere 4 bis 7.
- Die Komponente C enthält eine oder mehrere Verbindungen ausgewählt aus der Gruppe bestehend aus XX bis XIV 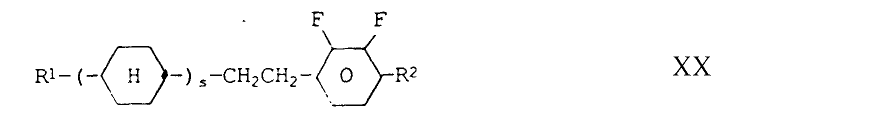 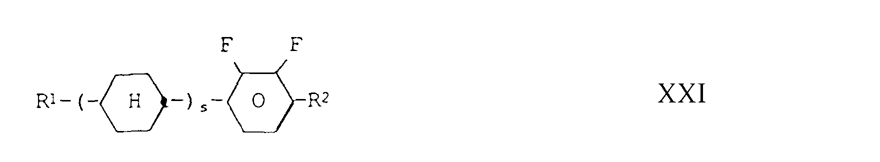 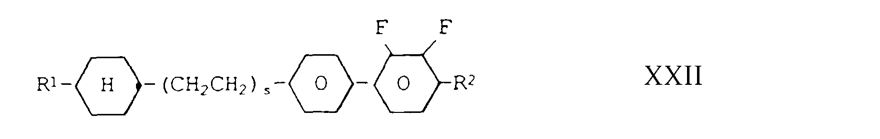 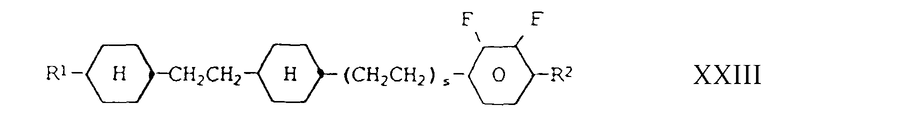 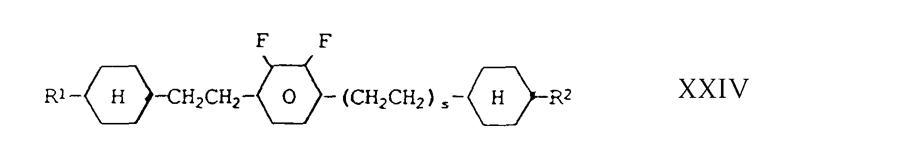 worin R¹ und R² die für Formel IX angegebene Bedeutung haben und s 0 oder 1 ist.
- Die Komponente B enthält eine oder mehrere Verbindungen ausgewählt aus der Gruppe bestehend aus XXV bis XXVII 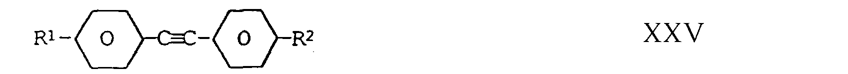 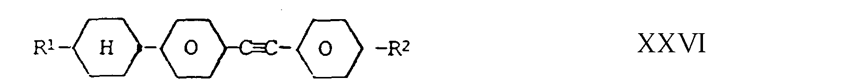 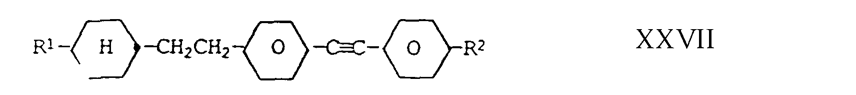 worin R¹ und R² die für Formel IX angegebene Bedeutung haben.

Bevorzugt sind Mischungen, welche ausschließlich Verbindungen der Formeln I bis IV (Gruppe A) und Komponente C enthalten, d.h. keine Verbindungen der Komponente B.

Die bevorzugten Mischungen enthaltend terminal halogenisierte Verbindungen der Formeln I bis IV (X = F, Cl, -CF₃, -CHF₂, -OCF₃ oder -OCHF₃) weist besonders günstige Parameterkombinationen und gleichzeitig ein breites d/p-Fenster auf.

Erfindungsgemäße Flüssigkristallmischungen, deren Komponente A mindestens eine Verbindung der Formel T3 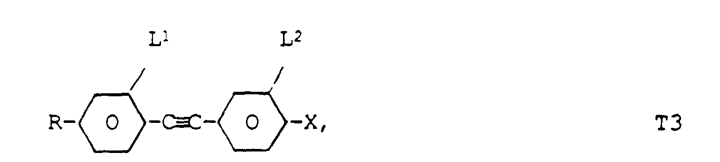 worin
- R: -CₙH₂ₙ₊₁, -OCₙH₂ₙ₊₁, 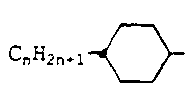 oder 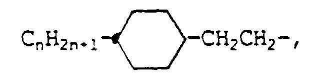
- n: eine ganze Zahl von 1-15, und
- L¹ und L²: jeweils unabhängig voneinander H oder F, und
- X: F, Cl oder OCF₃
bedeuten,

sind bevorzugt. Insbesondere solche Mischungen die mindestens eine Verbindung der Formel T3 und mindestens eine Verbindung der Formeln Ia bis Ic, IIa, IIc und IIa bis IIc enthalten, weisen günstige Werte für die Schwellenspannung V_{10/0/20} und die FließvLskosität η auf und sind durch relativ hohe oder hohe Werte für die optische Anisotropie gekennzeichnet. Da wegen des relativ hohen Wertes für Δn die Schichtdicke d relativ klein gewählt werden kann, sind mit diesen besonders bevorzugten Mischungen betriebene Displays i.a. durch günstige Werte für die Ein- und/oder Ausschaltzeiten tₒₙ, und/ oder t_{off} gekennzeichnet. Diese Mischungen sind bevorzugt.

Die erfindungsgemäßgen Mischungen zeichnen sich insbesondere sein Einsatz in SFA's mit hohen Schichtdicken durch sehr niedrigee Summenschaltzeiten aus (= tₒₙ + t_{off}).

Niedrige Summenschaltzeiten sind insbesondere ein wichtiges Kriterium für SFA's beim Einsatz als Anzeigen von Laptops, um Cursorbewegungen störungsfrei darstellen zu können.

Für die Komponente D stehen dem Fachmann eine Vielzahl, zum Teil kommerziell erhältlicher chiraler Dotierstoffe zur Verfügung. Deren Wahl ist an sich nicht Kritisch.

Die in den erfindungsgemäßen SFA's verwendeten Flüssigkristallmischungen sind dielektrisch positiv mit Δε ≥ 1. Besonders bevorzugt sind Flüssigkristallmischungen mit Δε ≥ 3 und ganz besonders solche mit Δε ≥ 5.

Die erfindungsgemäßen Flüssigkristallmischungen weisen günstige Werte für die Schwellenspannung V_{10/0/20} und für die Fließviskosität η auf. Ist der Wert für den optischen Wegunterschied d.Δn vorgegeben, wird der Wert für die Schichtdicke d durch die optische Anisotropie Δn bestimmt. Insbesondere bei relativ hohen Werten für d.Δn ist i.a. die Verwendung erfindungsgemäßer Flüssigkristallmischungen mit einem relativ hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für An enthalten, sind durch vorteilhafte Werte für die Schaltzeiten gekennzeichnet. Die erfindungsgemäßen Flüssigkristallmischungen sind weiter durch vorteilhafte Werte für die Steilheit der elektrooptischen Kennlinie gekennzeichnet und können mit hohen Multiplexraten betrieben werden. Darüberhinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblicher Bauweise. Dabei ist der Begriff der üblichen Bauweise hier weit gefaßt und umfaßt auch alle Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise.

In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:

| | |
|---|---|
| S-N | Phasenübergangs-Temperatur smektisch-nematisch, |
| N-I | Phasenübergangs-Temperatur nematisch-isotop, |
| Klp. | Klärpunkt, |
| Visk. | Viskosität (m Pa.s), |
| Tₒₙ | Zeit vom Einschalten bis zur Erreichung von 90 % des maximalen Kontrastes |
| T_{off} | Zeit vom Ausschalten bis zur Erreichung von 10 % des maximalen Kontrastes |

Die SFA wird im Multiplexbetrieb angesteuert (Multiplex-verhältnis) 1:240, Bias 1:16, Betriebsspannung 18,5 Volt).

Vor- und nachstehend sind alle Temperaturen in °C angegeben. Die Prozentzahlen sind Gewichtsprozente. Die Werte für die Schaltzeiten und Viskositäten beziehen sich auf 20 °C.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest CₙH₂ₙ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹, L² und L³;

| Code für R¹, R², L¹, L², L³ | R¹ | R² | L¹ | L² | L³ |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | OCₙH₂ₙ₊₁ | CₘH₂ₘ₊₁ | H | H | H |
| n | CₙH₂ₙ₊₁ | CN | H | H | H |
| nF | CₙH₂ₙ₊₁ | F | H | H | H |
| nOF | OCₙH₂ₙ₊₁ | F | H | H | H |
| nCl | CₙH₂ₙ₊₁ | Cl | H | H | H |
| nF . F | CₙH₂ₙ₊₁ | F | H | F | H |
| nOmFF | CₙH₂ₙ₊₁ | OCₘH₂ₘ₊₁ | F | F | H |
| nmF | CₙH₂ₙ₊₁ | CₘH₂ₘ₊₁ | F | H | H |
| nCF₃ | CₙH₂ₙ₊₁ | CF₃ | H | H | H |
| nOCF₃ | CₙH₂ₙ₊₁ | OCF₃ | H | H | H |
| nOCF₂ | CₙH₂ₙ₊₁ | OCHF₂ | H | H | H |
| nS | CₙH₂ₙ₊₁ | NCS | H | H | H |
| RvsN | CᵣH₂ᵣ₊₁-CH=CH-CₛH₂ₛ- | CN | H | H | H |
| rEsN | CᵣH₂ᵣ₊₁-O-CₛH₂ₛ- | CN | H | H | H |
| nNF | CₙH₂ₙ₊₁ | CN | F | H | H |
| nAm | CₙH₂ₙ₊₁ | COOCₘH₂ₘ₊₁ | H | H | H |
| nF.F.F | CₙH₂ₙ₊₁ | F | H | F | F |
| nCl.F.F | CₙH₂ₙ₊₁ | Cl | H | F | F |
| mOCF₃.F | CₙH₂ₙ₊₁ | OCF₃ | H | F | H |
| nOCF₃.F.F | CₙH₂ₙ₊₁ | OCF₃ | H | F | F |
| nOCF₂.F | CₙH₂ₙ₊₁ | OCF₂H | H | F | H |
| nOCF₂.F.F | CₙH₂ₙ₊₁ | OCF₂H | H | F | F |
| nCF₃.F | CₙH₂ₙ₊₁ | CF₃ | H | F | H |
| nCF₃.F.F | CₙH₂ₙ₋₁ | CF₃ | H | F | F |

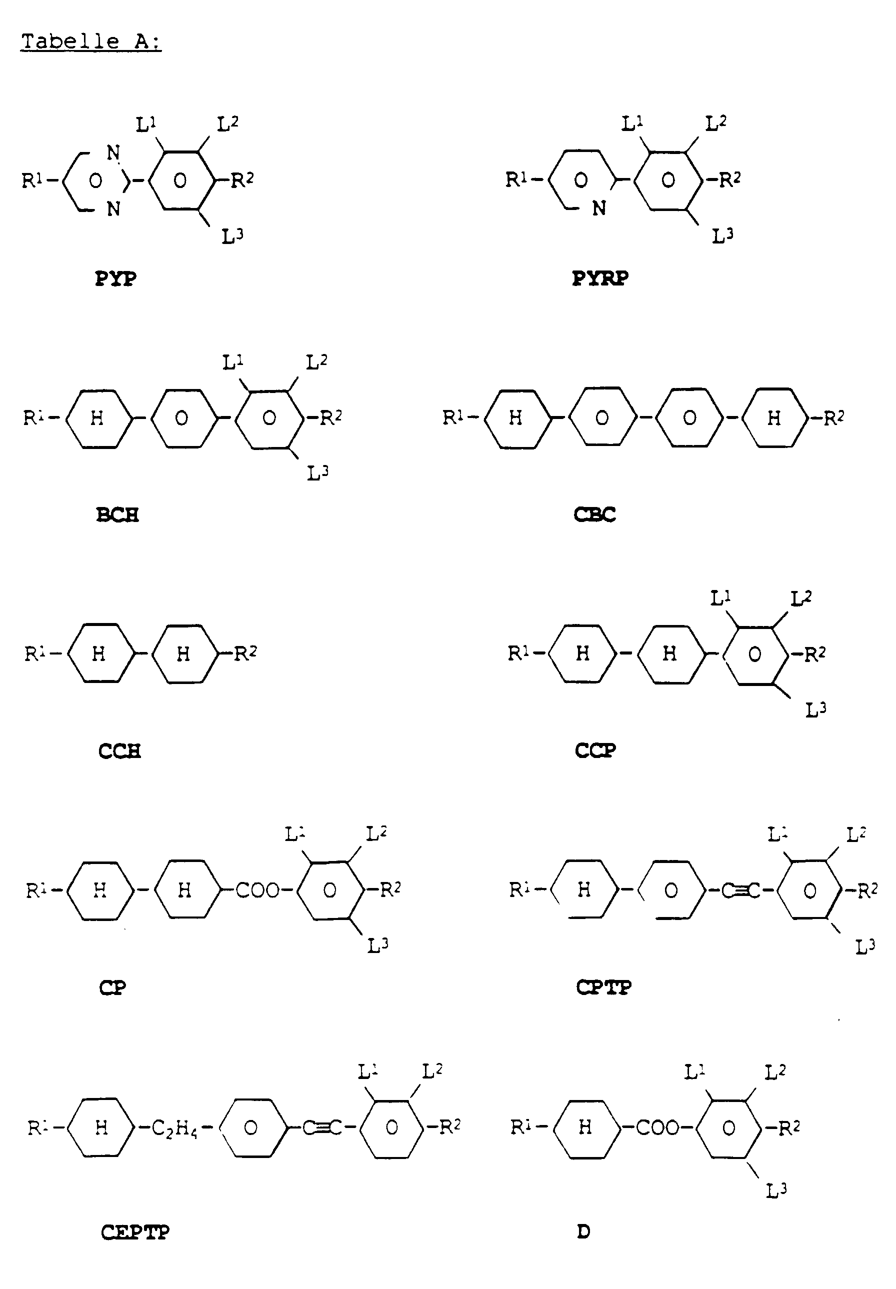

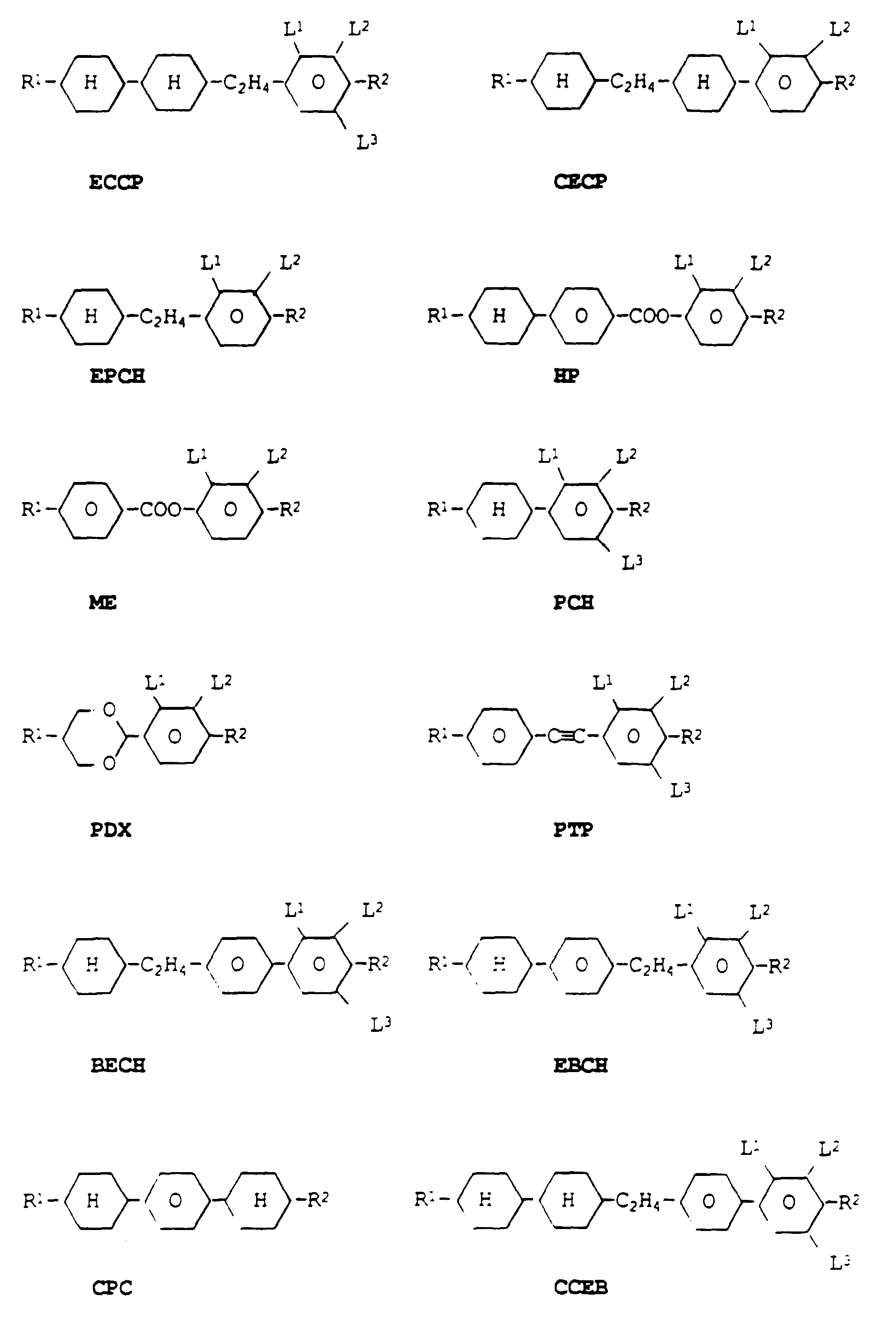

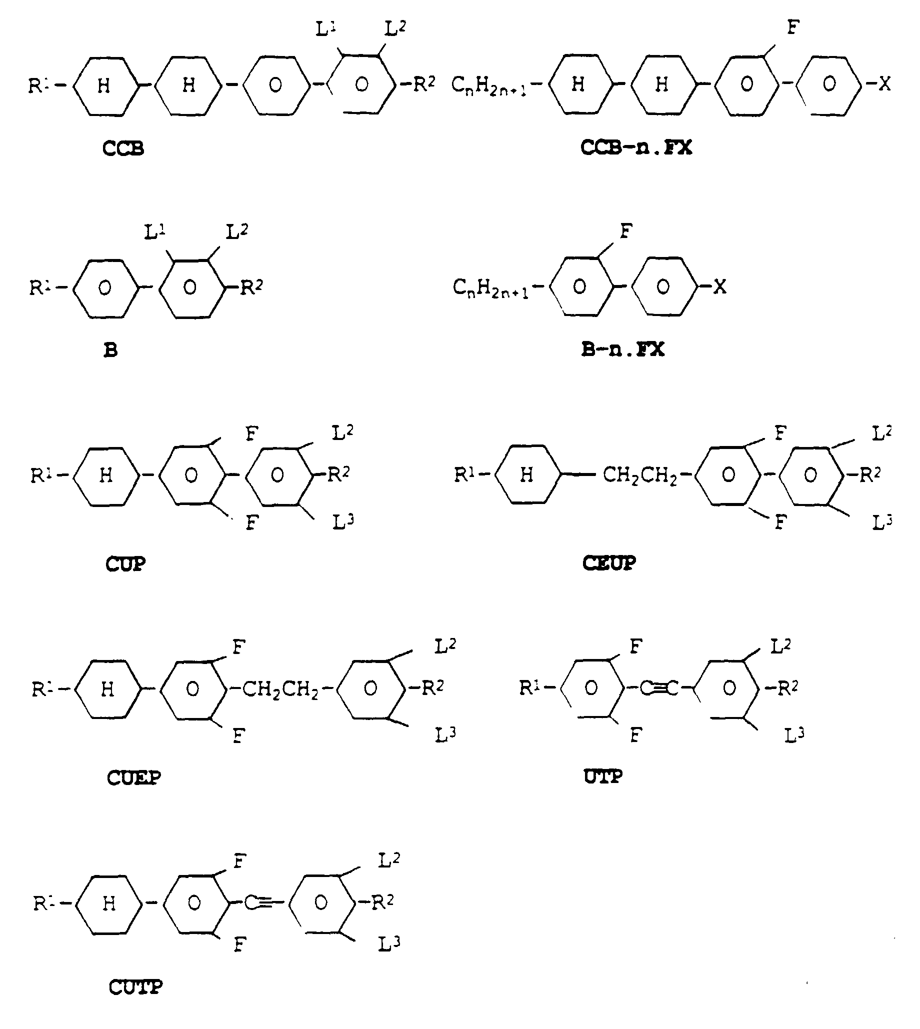

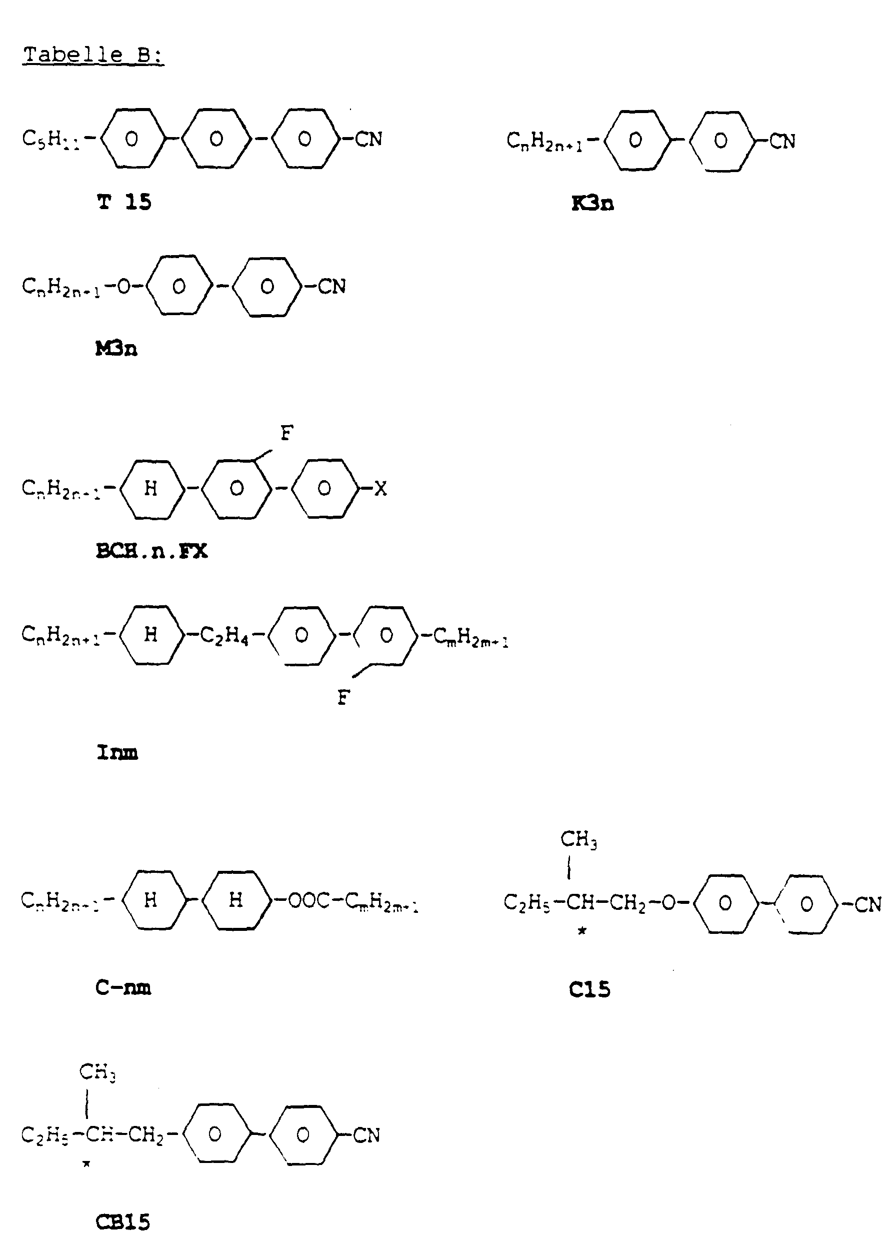

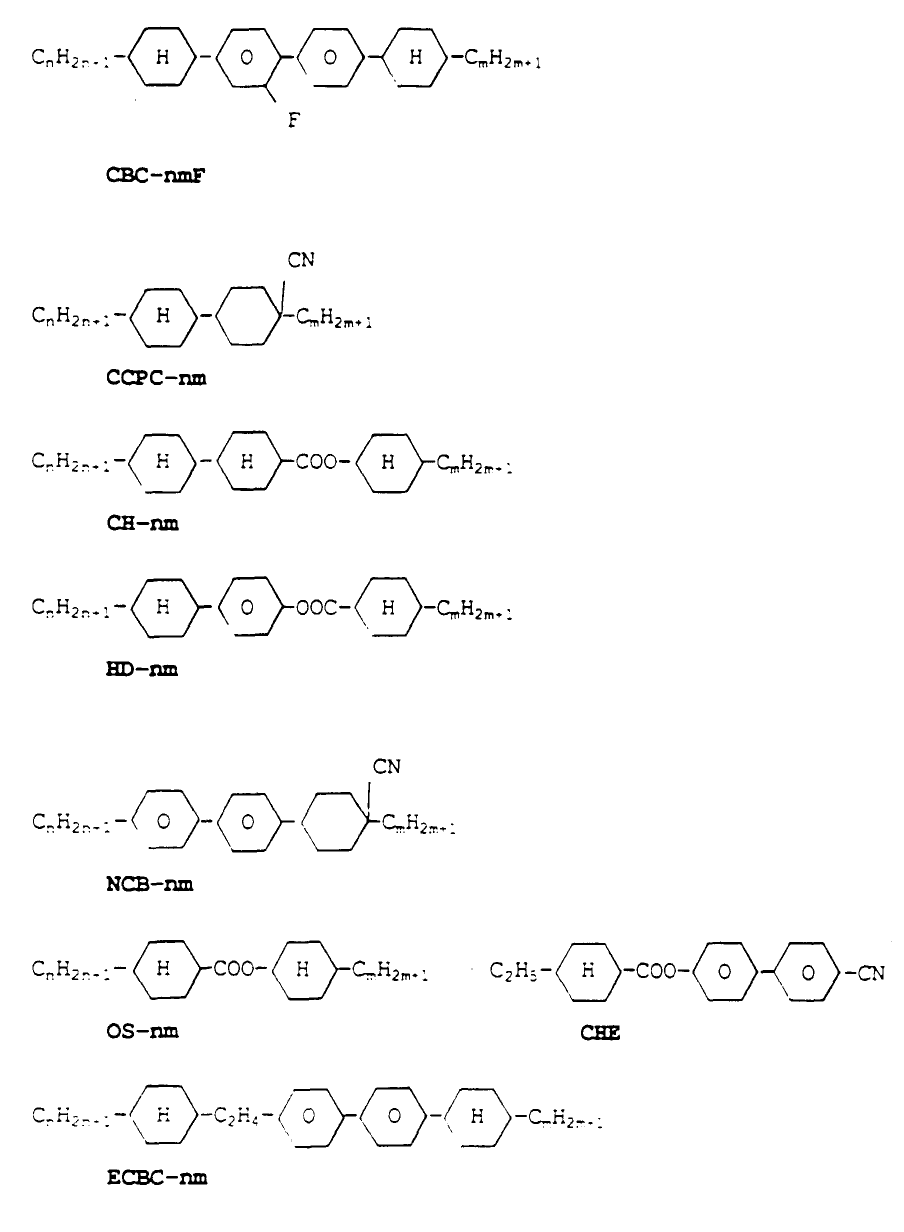

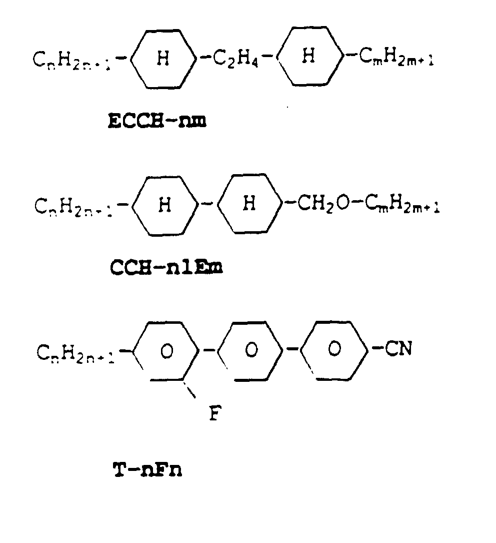

### Beispiel 1

Ein SFA vom Typ STN mit folgenden Parametern,

| | |
|---|---|
| Verdrillungswinkel | 240° |
| Anstellwinkel | 5° |
| d | 7,7 µm |

enthaltend eine Flüssigkristallmischung mit folgenden Parametern

| | |
|---|---|
| Klärpunkt: | 71° |
| Δn: | 0,19 |

und bestehend aus einer Basismischung aus

| | |
|---|---|
| PYP-3Cl.F | 9 % |
| PYP-4Cl.F | 9 % |
| PYP-5Cl.F | 8 % |
| PCH-30CF₃ | 10 % |
| CCP-2OCF₃ | 4 % |
| CCP-3OCF₃ | 5 % |
| CCP-4OCF₃ | 5 % |
| CCP-5OCF₃ | 5 % |
| PTP-102 | 3 % |
| PTP-201 | 4 % |
| PTP-20F | 7 % |
| PTP-40F | 3 % |
| BCH-3OCF₃ | 10 % |
| CPTP-3OCF₃ | 9 % |
| CPTP-5OCF₃ | 8 % |
| CPTP-301 | 3 % |
| CPTP-302 | 3 % |

und einer chiralen Komponente (p-(p-n-Hexylbenzoyloxy)-benzoesäure-2-octylester) weist eine Schwellenspannung von 1,9 V auf.

### Beispiel 2

Ein SFA vom Typ STN mit folgenden Parametern,

| | |
|---|---|
| Verdrillungswinkel | 240° |
| Anstellwinkel | 5° |
| d | 8,0 µm |

enthaltend eine Flüssigkristallmischung mit folgenden Parametern,

| | |
|---|---|
| Klärpunkt | 65° |
| Δn | 0,153 |

und bestehend aus einer Basismischung aus

| | |
|---|---|
| PYP-2F | 9 % |
| PYP-3F | 9 % |
| PYP-5F | 8 % |
| PCH-30CF₃ | 10 % |
| CCP-2OCF₃ | 7 % |
| CCP-3OCF₃ | 7 % |
| CCP-4OCF₃ | 7 % |
| CCP-5OCF₃ | 6 % |
| PTP-20F | 10 % |
| EBCH-3F.F | 5 % |
| EBCH-5F.F | 5 % |
| CPTP-30CF₃ | 9 % |
| CPTP-50CF₃ | 8 % |

und einer chiralen Komponente (vgl. Beispiel 1) weist eine Schwellenspannung von 1,96 V auf.

### Beispiel 3

Ein SFA vom Typ STN mit folgenden Parametern:

| | |
|---|---|
| Verdrillungswinkel | 240° |
| Anstellwinkel | 5° |
| d | 7,9 µm |

enthaltend eine Flüssigkristallmischung mit folgenden Parametern:

| | |
|---|---|
| Klärpunkt | 71° |
| Δn | 0,143 |

und bestehend aus einer Basismischung aus:

| | |
|---|---|
| PYP-2F | 9 % |
| PYP-3F | 9 % |
| PYP-5F | 7 % |
| PCH-5F | 6 % |
| PCH-7F | 5 % |
| CCP-2OCF₃ | 8 % |
| CCP-3OCF₃ | 6 % |
| CCP-4OCF₃ | 7 % |
| CCP-5OCF₃ | 6 % |
| PTP-20F | 6 % |
| PTP-40F | 4 % |
| BECH-3F.FCl | 6 % |
| BECH-3F.FCl | 4 % |
| CPTP-30CF₃ | 8 % |
| CPTP-50CF₃ | 7 % |
| CBC-33F | 2 % |

und einer chiralen Komponente (vgl. Beispiel 1) weist eine Schwellenspannung von 1,93 V auf.

### Beispiel 4

Eine Flüssigkristallmischung bestehend aus:

| | | |
|---|---|---|
| PYP-2F | 9 % | T_{c} = 67 °C |
| PYP-3F | 9 % | Δn = 0,1477 |
| PYP-5F | 8 % | |
| PCH-30CF₃ | 10 % | |
| CCP-2OCF₃ | 7 % | |
| CCP-3OCF₃ | 7 % | |
| CCP-4OCF₃ | 7 % | |
| CCP-5OCF₃ | 6 % | |
| PTP-20F | 10 % | |
| BCH-30CF₃ | 10 % | |
| CPTP-30CF₃ | 9 % | |
| CPTP-50CF₃ | 8 % | |

und einer chiralen Komponente (vgl. Beispiel 1) ergibt in einer SFA vom Typ STN (Parameter vgl. Beispiel 1) eine Schwellenspannung von 1,92 V.

### Beispiel 5

Eine Flüssigkristallmischung bestehend aus:

| | | |
|---|---|---|
| PYP-2F | 9 % | T_{c} = 69 °C |
| PYP-3F | 9 % | An = 0,1763 |
| PYP-5F | 8 % | |
| PCH-30CF₃ | 10 % | |
| CCP-2OCF₃ | 4 % | |
| CCP-3OCF₃ | 5 % | |
| CCP-5OCF₃ | 5 % | |
| PTP-102 | 3 % | |
| PTP-201 | 4 % | |
| PTP-20F | 7 % | |
| PTP-40F | 3 % | |
| BCH-30CF₃ | 10 % | |
| CPTP-30CF₃ | 9 % | |
| CPTP-50CF₃ | 8 % | |
| CPTP-301 | 3 % | |
| CPTP-302 | 3 % | |

und einer chiralen Komponente (vgl. Beispiel 1) ergibt in einer SFA vom Typ STN (Parameter vgl. Beispiel 1) eine Schwellenspannung von 2,0 V.

### Beispiel 6

Eine Flüssigkristallmischung bestehend aus:

| | | |
|---|---|---|
| PYP-2F | 9 % | T_{c} = 68 °C |
| PYP-3F | 9 % | Δn = 0,1484 |
| PYP-5F | 8 % | |
| PCH-5OCF₃ | 10 % | |
| CCP-2OCF₃ | 7 % | |
| CCP-3OCF₃ | 7 % | |
| CCP-4OCF₃ | 7 % | |
| CCP-5OCF₃ | 6 % | |
| PTP-20F | 10 % | |
| BCH-30CF₃ | 10 % | |
| CPTP-30CF₃ | 9 % | |
| CPTP-50CF₃ | 8 % | |

und einer chiralen Komponente (vgl. Beispiel 1) ergibt in einer SFA vom Typ STN (Parameter vgl. Beispiel 1) eine Schwellenspannung von 1,84 V.

### Beispiel 7

Eine Flüssigkristallmischung bestehend aus:

| | | |
|---|---|---|
| PYP-3F | 12,0 | N 83 I |
| PYP-5F | 12,0 | Δn 0,1050 |
| PCH-302 | 9,0 | |
| CCP-20CF₃ | 5,0 | |
| CCP-30CF₃ | 5,0 | |
| CCP-40CF₃ | 4,0 | |
| CCP-50CF₃ | 5,0 | |
| ECCP-30CF₃ | 4,0 | |
| ECCP-50CF₃ | 4,0 | |
| ECCP-3F.F | 10,0 | |
| ECCP-5F.F | 10,0 | |
| CCH-303 | 8,0 | |
| CBC-33F | 4,0 | |
| CBC-53F | 4,0 | |
| CBC-55F | 4,0 | |

und einer chiralen Komponente (vgl. Beispiel 1) ergibt in einer SFA vom Typ STN (Parameter vgl. Beispiel 1) eine Schwellenspannung von 2,01 V.

### Beispiel 8

Eine Flüssigkristallmischung bestehend aus:

| | | |
|---|---|---|
| PYP-2F | 9,0 | S < -19 N 68 I |
| PYP-3F | 9,0 | Δn 0,1484 |
| PYP-5F | 8,0 | |
| PCH-50CF₃ | 10,0 | |
| CCP-20CF₃ | 7,0 | |
| CCP-30CF₃ | 7,0 | |
| CCP-40CF₃ | 7,0 | |
| CCP-50CF₃ | 6,0 | |
| BCH-30CF₃ | 10,0 | |
| PTP-20F | 10,0 | |
| CPTP-30CF₃ | 9,0 | |
| CPTP-50CF₃ | 8,0 | |

und einer chiralen Komponente ergibt in einer um 240° verdrillten SFA vom Typ STN mit einer Schichtdicke von 5,9 µm, eine Schwellenspannung von 1,82 V, mit einer Steilheit von 16,6 %, bei einer Multiplexrate von 1:100 eine Summenschaltzeit von 190 msec und bei einer Multiplexrate von 1:200 eine Summenschalzeit von 210 msec.

### Beispiel 9

Eine Flüssigkristallmischung bestehend aus:

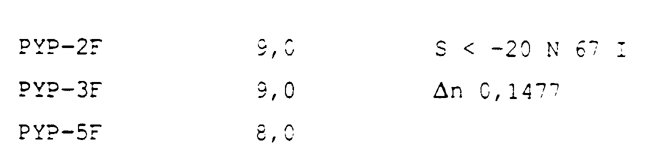

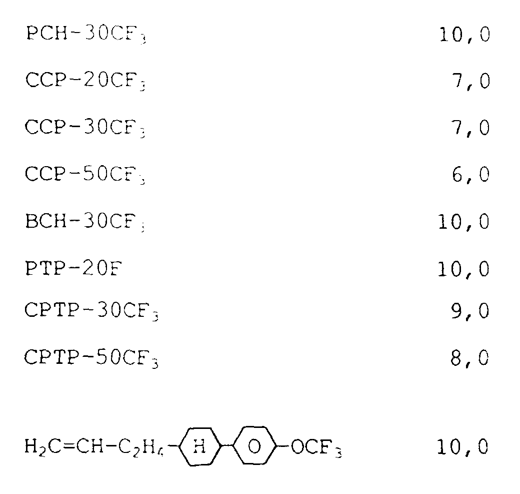

un einer chiralen Komponente ergibt in einer um 240° verdrillten SFA vom Typ STN mit einer Schichtdicke von 5,9 µm eine Schwellenspannung von 1,89 V, mit einer Steilheit von 15,3 %, bei einer Multiplexrate von 1:100 eine Summenschaltzeit von 180 msec und bei einer Multiplexrate von 1:200 eine Summenschaltzeit von 190 msec.

### Beispiel 12

| | | |
|---|---|---|
| PYP-3F | 8,0 | S < -30 N 79 I |
| PYP-5F | 7,0 | Δε + 5,8 |
| EPCH-2OCF₃ | 10,2 | |
| PCH-7F | 10,2 | |
| CCP-3OCF₃ | 11,8 | |
| CCP-5OCF₃ | 11,1 | |
| ECCP-3OCF₃ | 11,1 | |
| ECCP-3OCF₃ | 7,7 | |
| ECCP-3F.F | 11,8 | |
| CBC-33F | 3, 4 | |
| CBC-53F | 4, 3 | |
| CBC-55F | 3,4 | |

### Beispiel 13

Eine Flüssigkristallmischung bestehend aus

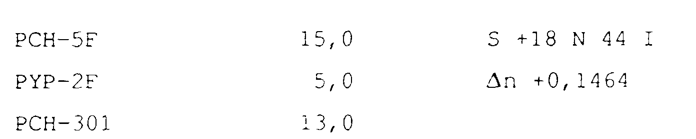

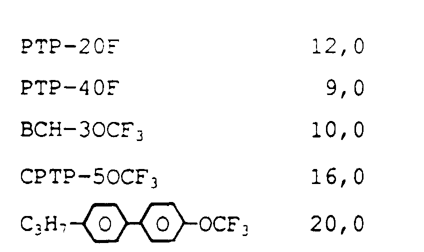

und einer chiralen Komponente ergibt in einer SFA vom Typ STN eine Schwellenspannung von 1,94 V.

### Beispiel 14

| | | |
|---|---|---|
| PYP-2F | 10,0 | S -3 N +70 I |
| PYP-3F | 9,0 | |
| PYP-5F | 8,0 | |
| PCH-3OCF₃ | 10,0 | |
| CCP-2OCF₃ | 4,0 | |
| CCP-3OCF₃ | 5,0 | |
| CCP-4OCF₃ | 5,0 | |
| CCP-5OCF₃ | 5,0 | |
| PTP-102 | 4,0 | |
| PTP-201 | 4,0 | |
| PTP-20F | 4,0 | |
| PTP-40F | 4,0 | |
| CPTP-3OCF₃ | 10,0 | |
| CPTP-5OCF₃ | 10,0 | |
| CPTP-301 | 4,0 | |
| CPTP-302 | 4,0 | |

wird zusammen mit einer chiralen Komponente (vgl. Beispiel 1) in eine SFA vom Typ STN gefüllt.

### Beispiel 15

Eine Flüssigkristallmischung bestehend aus:

| | | |
|---|---|---|
| PCH-5F | 30,0 | s < -30 N 38 I |
| PCH-5OCF₃ | 10,0 | Δn +0,1194 |
| PYP-2F | 4,0 | |
| PCH-301 | 10,0 | |
| PTP-20F | 10,0 | |
| PTP-40F | 10,0 | |
| BCH-3OCF₃ | 10,0 | |
| CPTP-5OCF₃ | 16,0 | |

und einer chiralen Komponente (vgl. Beispiel 1) ergibt in einer SFA vom Typ STN eine Schwellenspannung von 1,92 V.

## Patentansprüche

1. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und einem Verdrillungswinkel der Flüssigkristallmischung in der Zelle von Orientierungsschicht zu Orientierungsschicht dem Betrag nach zwischen 100 und 600°, wobei die nematische Flüssigkristallmischung
a) auf einer Komponente A basiert, welche eine oder mehrere Verbindungen der Formel I: 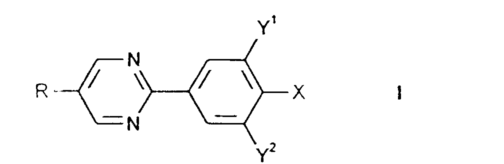 eine oder mehrere Verbindungen der Formeln II bis IV: 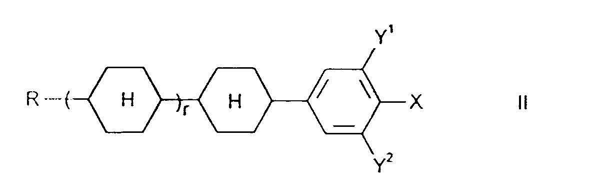 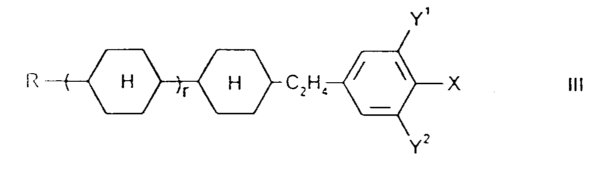 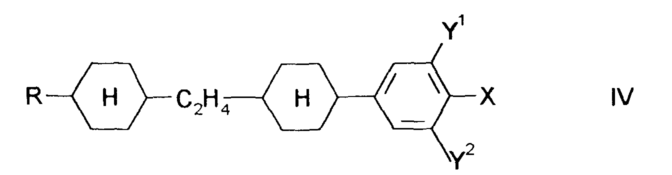 worin die einzelnen Reste folgende Bedeutung haben:
R: Alkyl, Oxaalkyl, geradkettiges Fluoralkyl der Formel -CₙH₂ₙF oder Alkenyl mit jeweils bis zu 7 C-Atomen,
X: F, Cl, CF₃, CHF₂, OCF₃, OCHF₂, -OCF₂CF₂H oder OC₂F₅,
Y¹ und Y² jeweils unabhängig voneinander H oder F,
r 0 oder 1,
enthält;
b) 0-40 Gew% einer flüssigkristallinen Komponente B, bestehend aus einer oder mehreren Verbindungen mit einer dielektrischen Anisotropie von -1,5 bis +1,5 der allgemeinen Formel IX, 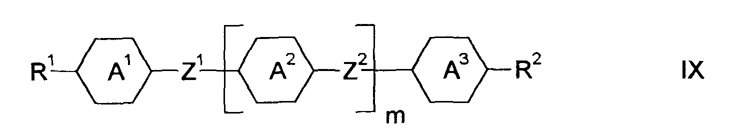 enthält,
worin
R¹ und R² jeweils unabhängig voneinander n-Alkyl, n-Alkoxy, n-Oxaalkyl, geradkettiges Fluoralkyl der Formel-CₙH₂ₙF oder n-Alkenyl mit bis zu 9 C-Atomen,
A¹, A² und A³ jeweils unabhängig voneinander 1,4-Phenylen, 2-oder 3-Fluor-1,4-phenylen, trans-1,4-Cyclohexylen oder 1,4-Cyclohexenylen,
Z¹ und Z² jeweils unabhängig voneinander -CH₂CH₂-, -C≡C- oder eine Einfachbindung, und
m 0,1 oder 2,
bedeuten,
c) 0-20 Gew% einer flüssigkristallinen Komponente C, bestehend aus einer oder mehreren Verbindungen mit einer dielektrischen Anisotropie von unter -1,5, die das Strukturelement 2,3-Difluorphenylen aufweisen, enthält, und
d) eine optisch aktive Komponente D in einer Menge enthält, daß das Verhältnis zwischen der Schichtdicke (Abstand der planparallelen Platten) und der natürlichen Ganghöhe der chiralen nematischen Flüssigkristallmischung etwa 0,2 bis 1,7, insbesondere etwa 0,2 bis 1,3 beträgt,
und die nematische Flüssigkristallmischung einen nematischen Phasenbereich von mindestens 60°C, eine Viskosität von nicht mehr als 35mPa·s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20°C bezogen sind,
dadurch gekennzeichnet, daß die nematische Flüssigkristallmischung 0 bis 5% an flüssigkristallinen Verbindungen, welche Cyanogruppen tragen, enthält.

2. Anzeige nach Anspruch 1, dadurch gekennzeichnet, daß Komponente A Verbindungen der Formeln I, II und III, worin X F bedeutet, und Verbindungen der Formeln II und/oder III, worin X OCF₃ bedeutet, enthält.

3. Anzeige nach mindestens einem der Ansprüche 1 bis 2, dadurch gekennzeichnet, daß X F, Cl, CF₃, -OCF₃, OCHF₂ oder -CHF₂ bedeutet.

4. Anzeige nach mindestens einem der Ansprüche 1 bis 3, dadurch gekennzeichnet, daß Komponente B eine oder mehrere Verbindungen ausgewählt aus der Gruppe bestehend aus IX1 bis IX7 enthält, 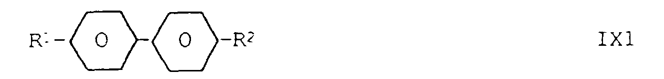 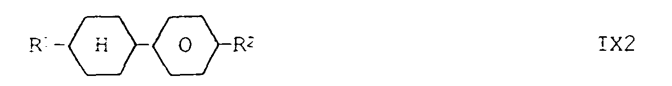 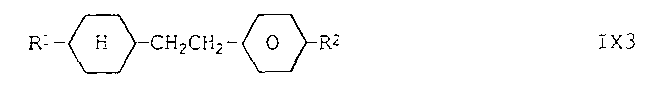 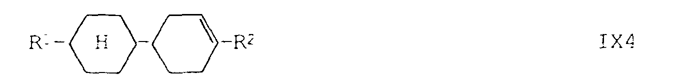 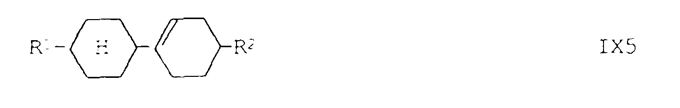 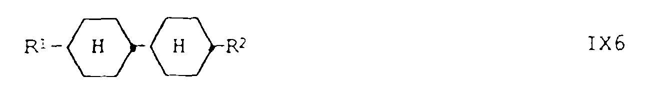 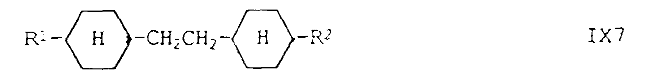 worin R¹ und R² die in Anspruch 1 angegebene Bedeutung haben.

5. Anzeige nach Anspruch 4, dadurch gekennzeichnet, daß Komponente B zusätzlich eine oder mehrere Verbindungen ausgewählt aus der Gruppe bestehend aus IX9 bis IX22 enthält, 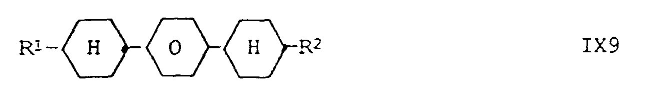 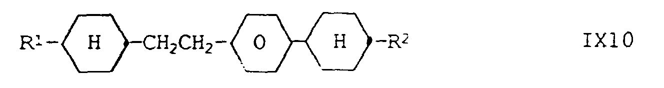 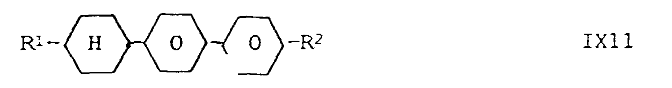 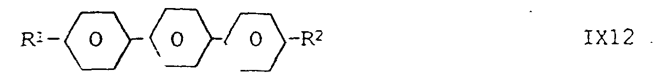 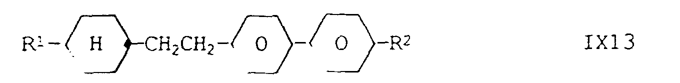 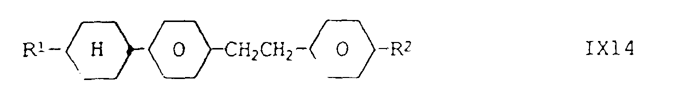 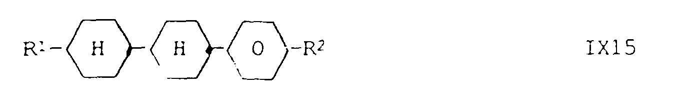 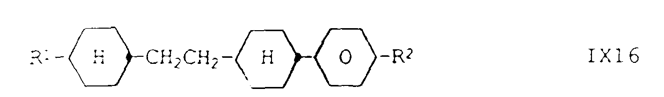 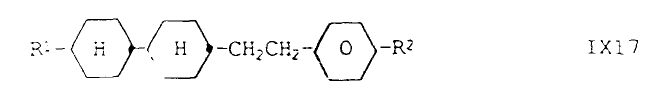 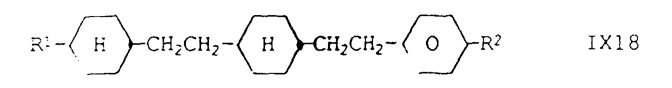 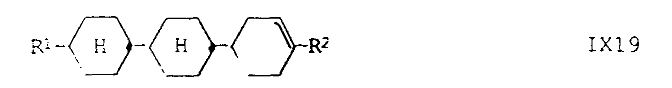 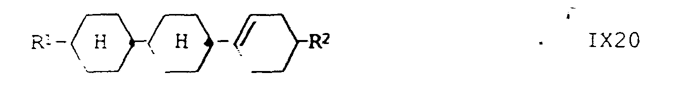 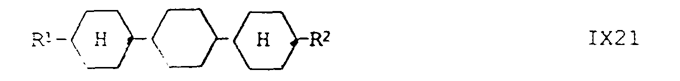 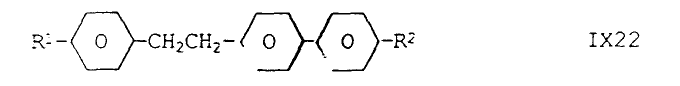 worin R¹ und R² die in Anspruch 1 angegebene Bedeutung haben und die 1,4-Phenylengruppen in IX9 bis IX18 und IX22 jeweils unabhängig voneinander auch durch Fluor ein- oder mehrfach substituiert sein können.

6. Anzeige nach Anspruch 4 oder 5, dadurch gekennzeichnet, daß Komponente B zusätzlich eine oder mehrere Verbindungen ausgewählt aus der Gruppe bestehend aus IX23 bis IX27 enthält, 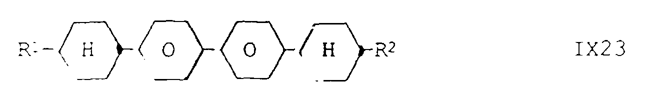 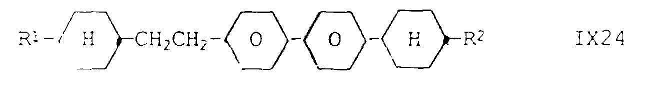 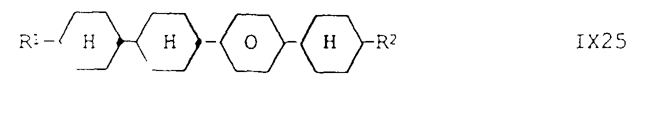 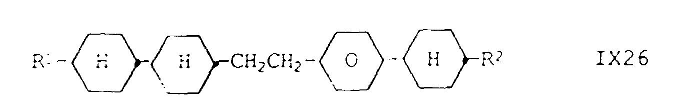 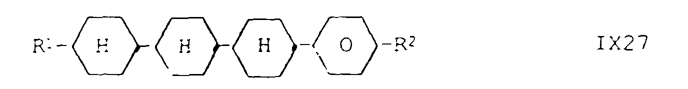 worin R¹ und R² die in Anspruch 1 angegebene Bedeutung haben und die 1,4-Phenylengruppen in IX23 bis IX27 jeweils unabhängig voneinander auch durch Fluor ein- oder mehrfach substituiert sein können.

7. Anzeige nach mindestens einem der Ansprüche 1 bis 6, dadurch gekennzeichnet, daß die Komponente A eine oder mehrere Verbindungen der Formel T3 enthält, 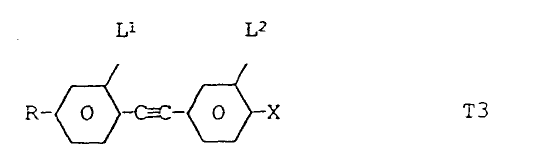 worin
R -CₙH₂ₙ₊₁, -OCₙH₂ₙ₊₁, 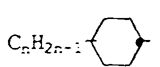 oder 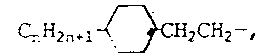
n eine ganze Zahl von 1-15,
L¹ und L² jeweils unabhängig voneinander H oder F, und
X F, Cl oder OCF₃ bedeuten.

8. Anzeige nach mindestens einem der Ansprüche 1 bis 7, dadurch gekennzeichnet, daß die Komponente B eine oder mehrere Verbindungen ausgewählt aus der Gruppe bestehend aus XXV bis XXVII enthält, 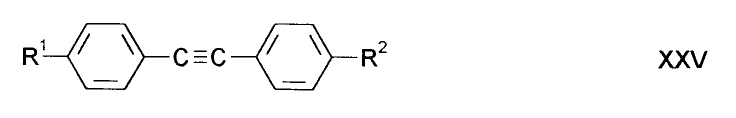 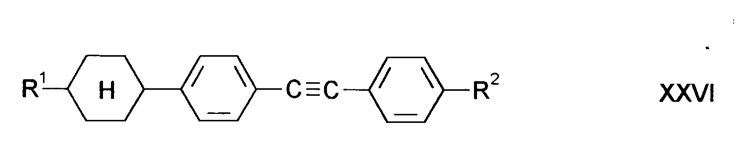 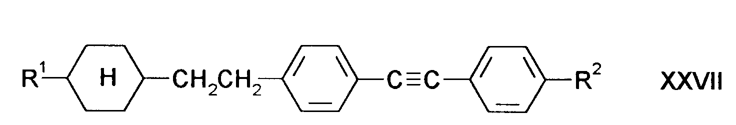 worin R¹ und R² die für Formel IX angegebene Bedeutung besitzen.

9. Anzeige nach mindestens einem der Ansprüche 1 bis 8, dadurch gekennzeichnet, daß die nematische Flüssigkristallmischung zusätzlich eine oder mehrere Verbindungen ausgewählt aus der Gruppe bestehend aus den allgemeinen Formeln V bis VIII und X bis XV enthält: 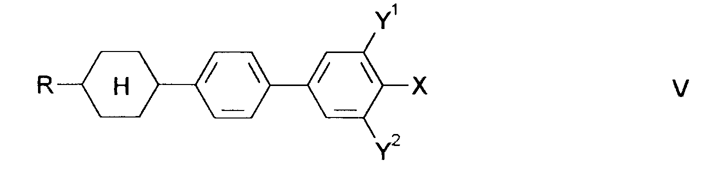 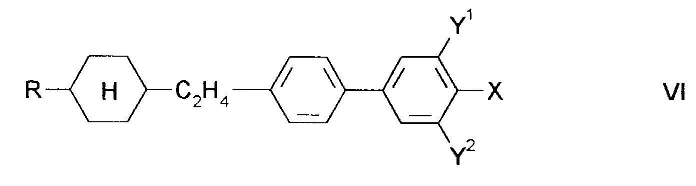 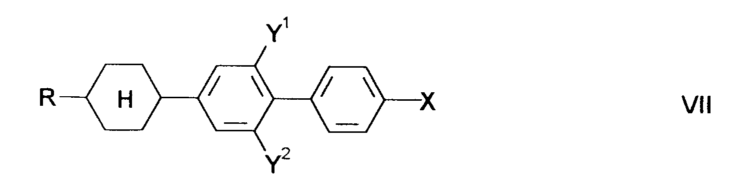 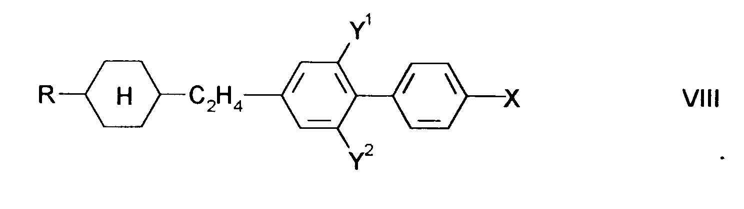 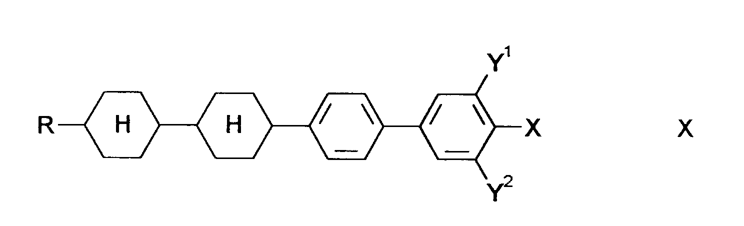 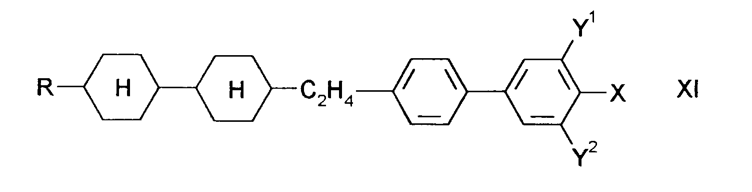 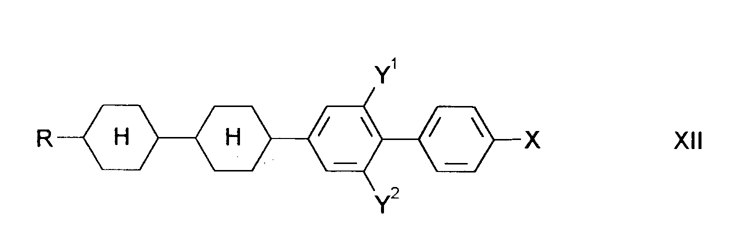 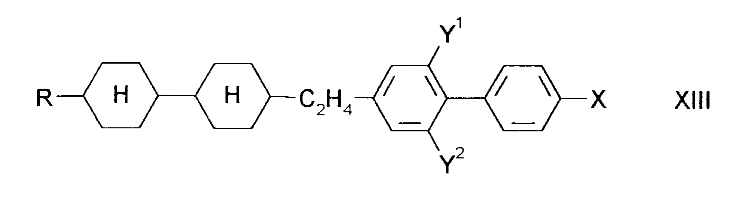 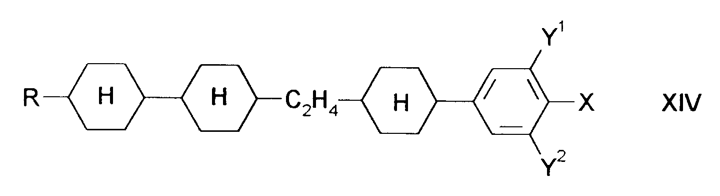 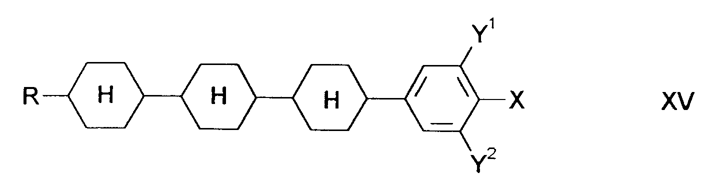 worin R, X, Y¹ und Y² jeweils unabhängig voneinander eine der in Anspruch 1 angegebenen Bedeutungen haben.

10. Anzeige nach mindestens einem der Ansprüche 1 bis 9, dadurch gekennzeichnet, daß die nematische Flüssigkristallmischung zusätzlich eine oder mehrere polare heterocyclische Verbindungen ausgewählt aus der Gruppe bestehend aus 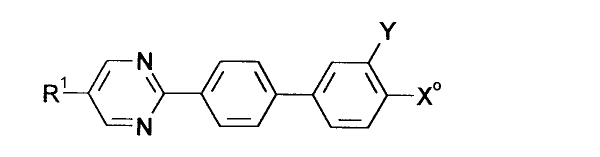 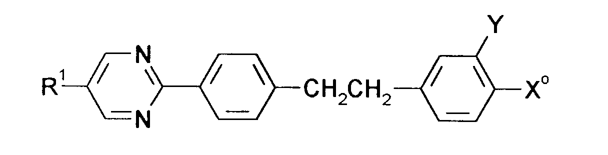 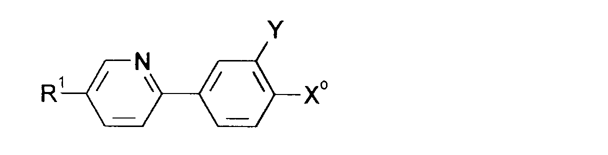 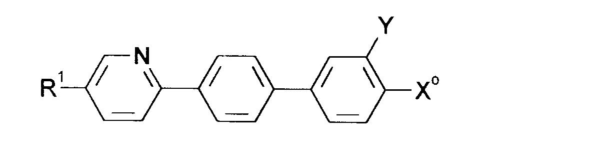 enthält, worin R¹ n-Alkyl mit 1 bis 7 C-Atomen oder (trans)-n-Alkenyl mit 3 bis 7 C-Atomen, X° F, Cl, CF₃, -OCF₃ oder OCHF₃ und Y H oder F bedeutet.

11. Anzeige nach mindestens einem der Ansprüche 1 bis 10, dadurch gekennzeichnet, daß die nematische Flüssigkristallmischung zusätzlich eine oder mehrere Verbindungen der folgenden Formel enthält, 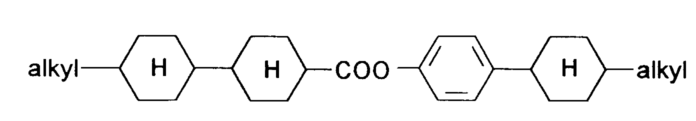 wobei alkyl n-Alkyl mit 1 bis 8 C-Atomen bedeutet.

12. Anzeige nach mindestens einem der Ansprüche 1 bis 11, dadurch gekennzeichnet, daß die nematische Flüssigkristallmischung zusätzlich eine oder mehrere Verbindungen ausgewählt aus der Gruppe bestehend aus XVIII und XIX enthält, 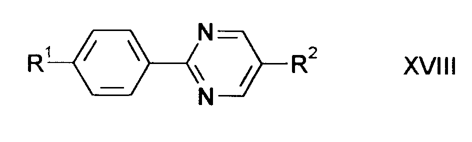 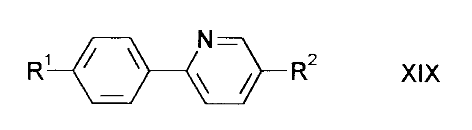 worin R¹ und R² die für Formel IX angegebene Bedeutung haben.

## Claims

1. Supertwist liquid-crystal display having
- two plane-parallel outer plates which, together with a frame, form a cell,
- a nematic liquid-crystal mixture of positive dielectric anisotropy which is located in the cell,
- electrode layers with overlying alignment layers on the insides of the outer plates,
- a tilt angle between the long axis of the molecules at the surface of the outer plates and the outer plates of from about 1 degree to 30 degrees, and a twist angle of the liquid-crystal mixture in the cell from alignment layer to alignment layer with a value of between 100 and 600°, where the nematic liquid-crystal mixture
a) is based on a component A which comprises one or more compounds of the formula I: 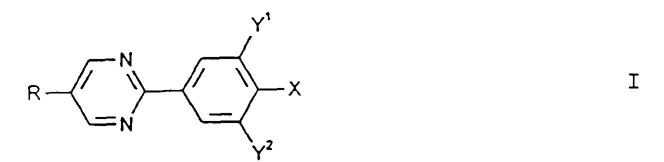 one or more compounds of the formulae II to IV: 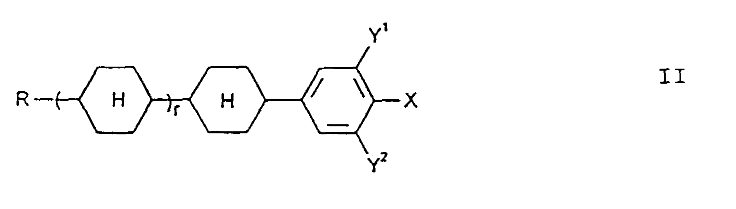 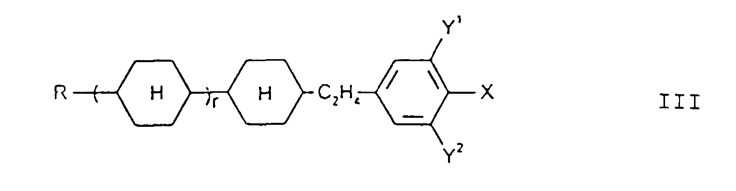 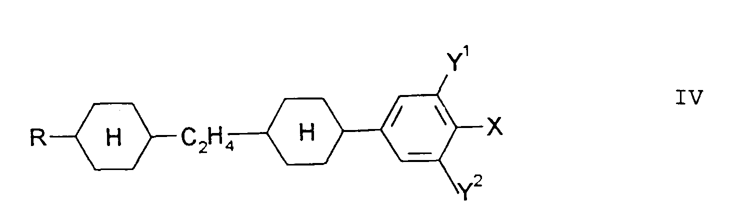 in which the individual radicals have the following meaning:
R: alkyl, oxaalkyl, straight-chain fluoroalkyl of the formula -CₙH₂ₙF or alkenyl, in each case having up to 7 carbon atoms,
X: F, Cl, CF₃, CHF₂, OCF₃, OCHF₂, -OCF₂CF₂H or OC₂F₅,
Y¹ and Y² in each case independently of one another H or F,
r 0 or 1;
b) comprises 0-40% by weight of a liquid-crystalline component B consisting of one or more compounds having a dielectric anisotropy of from -1.5 to +1.5, of the general formula IX 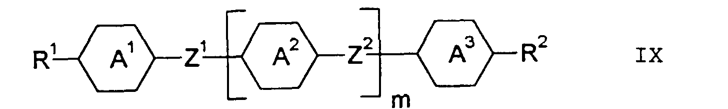 in which
R¹ and R² are each, independently of one another, n-alkyl, n-alkoxy, n-oxaalkyl, straight-chain fluoroalkyl of the formula -CₙH₂ₙF or n-alkenyl having up to 9 carbon atoms,
A¹, A² and A³ are each, independently of one another, 1,4-phenylene, 2- or 3-fluoro-1,4-phenylene, trans-1,4-cyclohexylene or 1,4-cyclohexenylene,
Z¹ and Z² are each, independently of one another, -CH₂CH₂-, -C≡C- or a single bond, and
m is 0, 1 or 2;
c) comprises 0-20% by weight of a liquid-crystalline component C consisting of one or more compounds having a dielectric anisotropy of below -1.5 and containing the structural unit 2,3-difluorophenylene, and
d) comprises an optically active component D in such an amount that the ratio between the layer thickness (separation of the plane-parallel plates) and the natural pitch of the chiral nematic liquid-crystal mixture is from about 0.2 to 1.7, in particular from about 0.2 to 1.3,
and the nematic liquid-crystal mixture has a nematic phase range of at least 60°C, a viscosity of not more than 35 mPa·s and a dielectric anisotropy of at least +1, the dielectric anisotropies of the compounds and the parameters based on the nematic liquid-crystal mixture being based on a temperature of 20°C characterized in that the nematic liquid-crytal mixture comprises 0 to 5% of liquid-crystalline compounds carrying cyano groups.

2. Display according to Claim 1, characterized in that component A contains compounds of the formulae I, II and III in which X is F, and compounds of the formulae II and/or III in which X is OCF₃.

3. Display according to at least one of Claims 1 to 2, characterized in that X is F, Cl, CF₃, -OCF₃, OCHF₂ or -CHF₂.

4. Display according to at least one of Claims 1 to 3, characterized in that component B contains one or more compounds selected from the group consisting of IX1 to IX7, 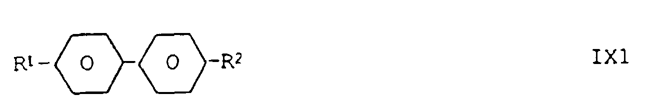 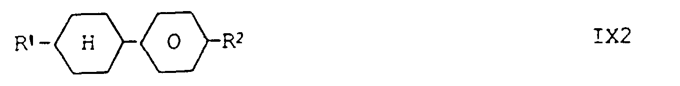 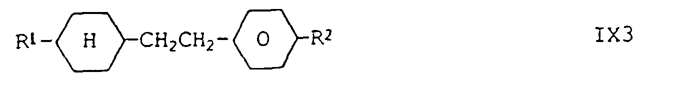 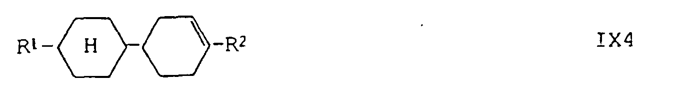 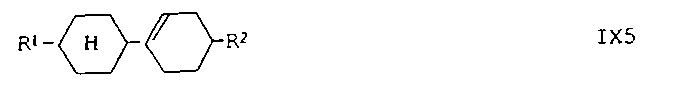 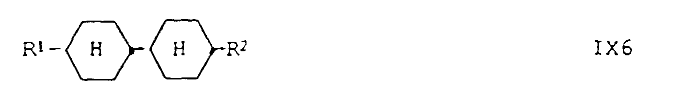 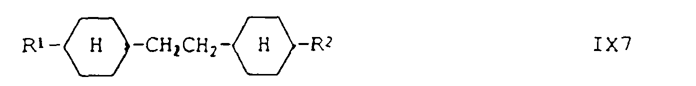 in which R¹ and R² have the meaning indicated in Claim 1.

5. Display according to Claim 4, characterized in that component B additionally contains one or more compounds selected from the group consisting of IX9 to IX22, 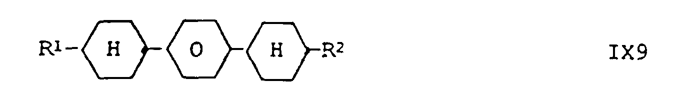 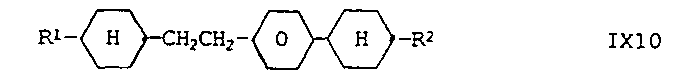 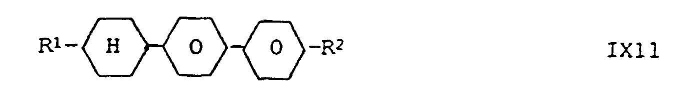 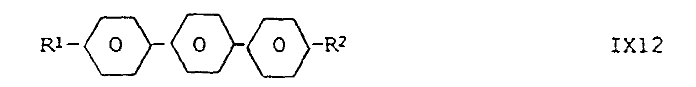 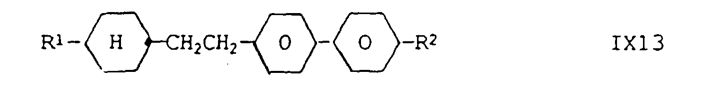 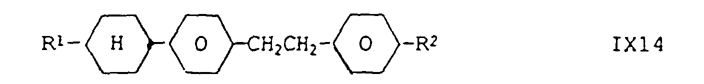 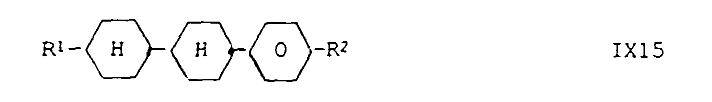 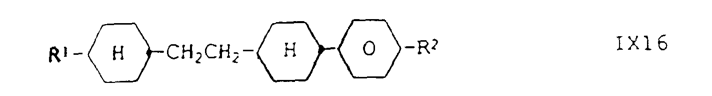 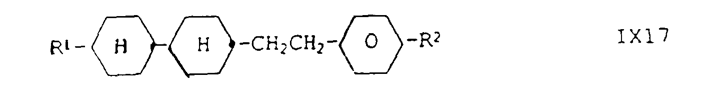 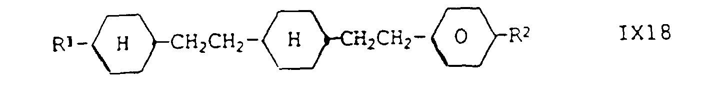 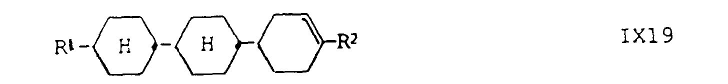 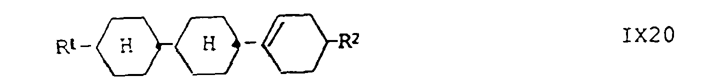 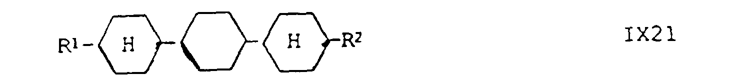 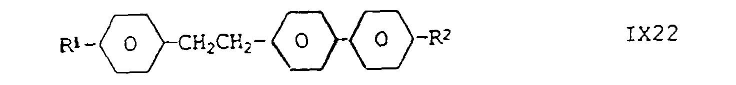 in which R¹ and R² have the meaning indicated in Claim 1, and the 1,4-phenylene groups in IX9 to IX18 and IX22 may each, independently of one another, also be monosubstituted or polysubstituted by fluorine.

6. Display according to Claim 4 or 5, characterized in that component B additionally contains one or more compounds selected from the group consisting of IX23 to IX27 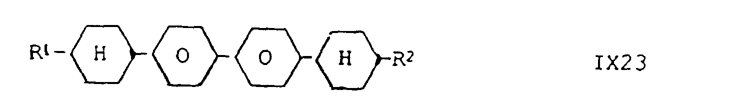 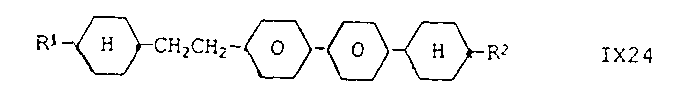 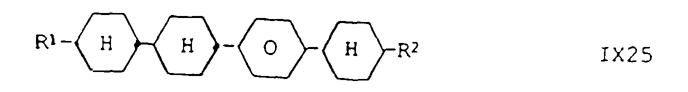 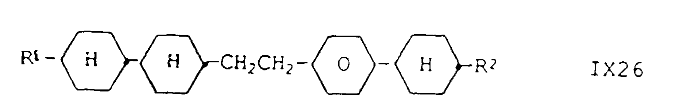 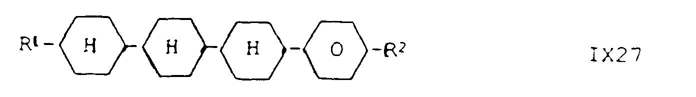 in which R¹ and R² have the meaning indicated in Claim 1, and the 1,4-phenylene groups in IX23 to IX27 may each, independently of one another, also be monosubstituted or polysubstituted by fluorine.

7. Display according to at least one of Claims 1 to 6, characterized in that the component A contains one or more compounds of the formula T3 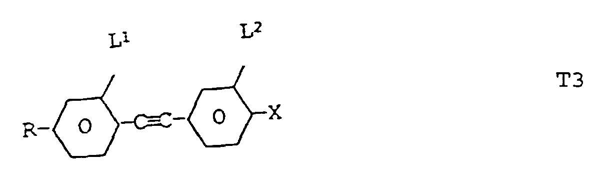 in which
R is -CₙH₂ₙ₊₁, -OCₙH₂ₙ₊₁, 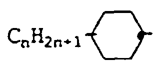 or 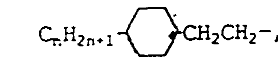
n is an integer from 1-15,
L¹ and L² are each, independently of one another, H or F, and
X is F, Cl or OCF₃.

8. Display according to at least one of Claims 1 to 7, characterized in that the component B comprises one or more compounds selected from the group consisting of XXV to XXVII 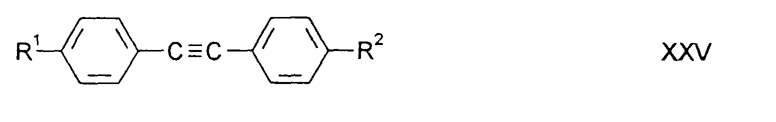 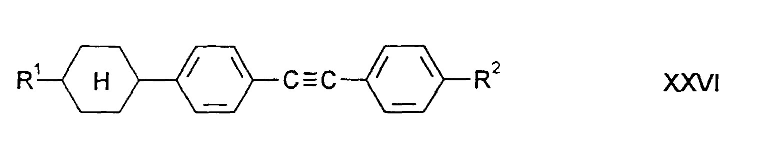 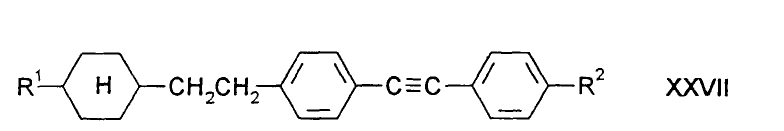 in which R¹ and R² are as defined for formula IX.

9. Display according to at least one of Claims 1 to 8, characterized in that the nematic liquid-crystal mixture additionally comprises one or more compounds selected from the group consisting of the general formulae V to VIII and X to XV: 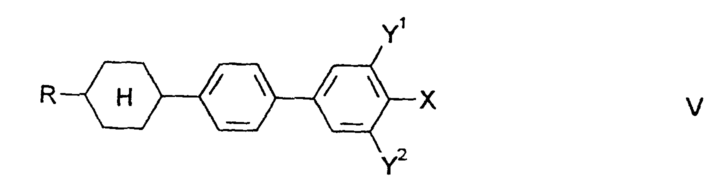 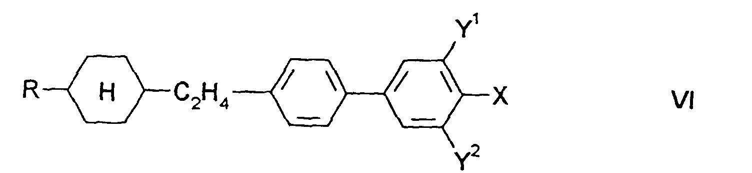 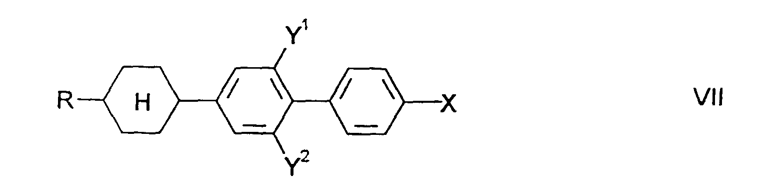 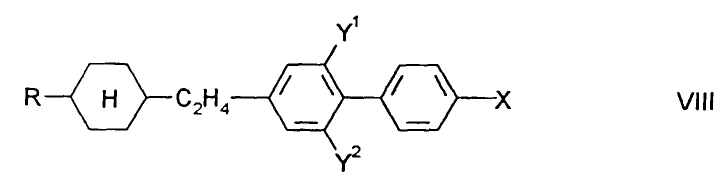 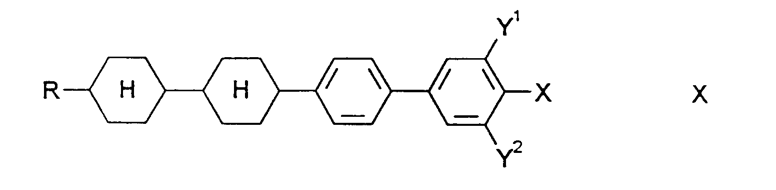 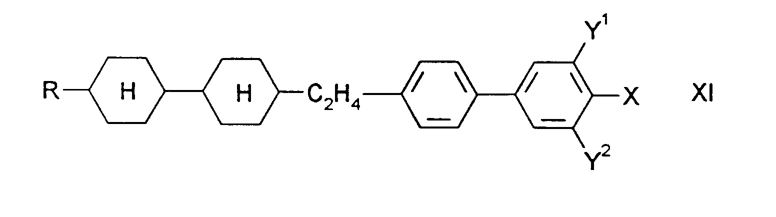 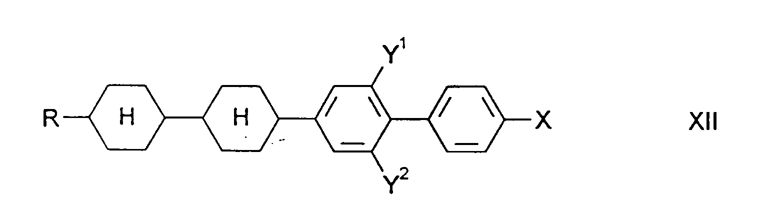 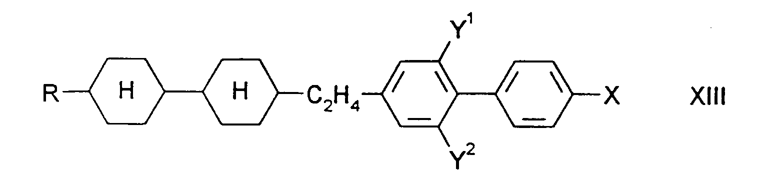 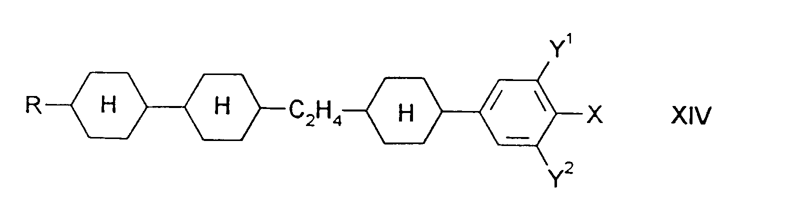 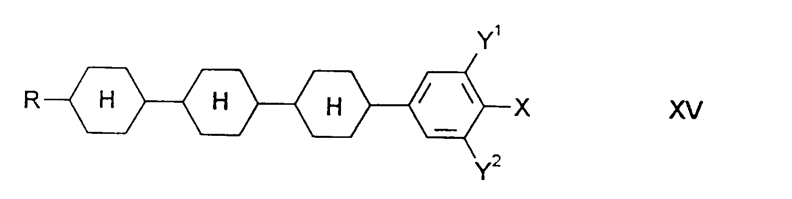 in which R, X, Y¹ and Y² each, independently of one another, have one of the meanings indicated in Claim 1.

10. Display according to at least one of Claims 1 to 9, characterized in that the nematic liquid-crystal mixture additionally comprises one or more polar heterocyclic compounds selected from the group consisting of 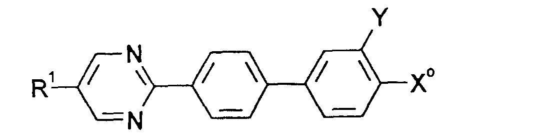 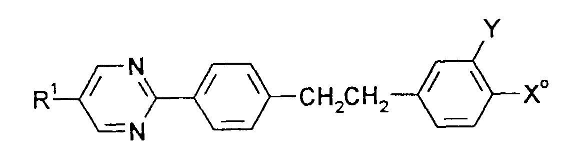 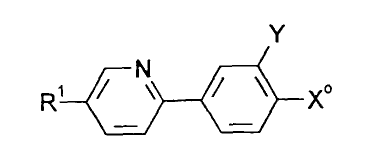 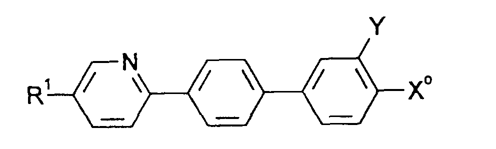 in which R¹ is n-alkyl having 1 to 7 carbon atoms or (trans)-n-alkenyl having 3 to 7 carbon atoms, X° is F, Cl, CF₃, -OCF₃ or OCHF₃, and Y is H or F.

11. Display according to at least one of Claims 1 to 10, characterized in that the nematic liquid-crystal mixture additionally comprises one or more compounds of the following formula 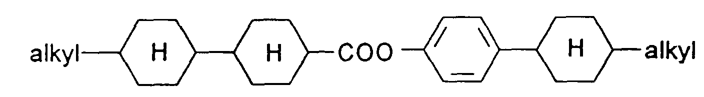 in which alkyl is n-alkyl having 1 to 8 carbon atoms.

12. Display according to at least one of Claims 1 to 11, characterized in that the nematic liquid-crystal mixture additionally comprises one or more compounds selected from the group consisting of XVIII and XIX 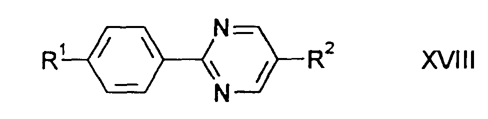 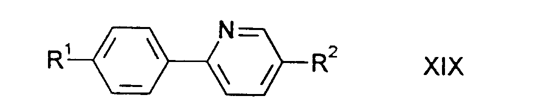 in which R¹ and R² are as defined for formula IX.

## Revendications

1. Affichage à cristaux liquides en super-hélice comportant :
◆ deux plaques de support parallèles planes formant, avec une bordure, une cellule,
◆ un mélange à cristaux liquides nématique et à anisotropie diélectrique positive, dans la cellule,
◆ des couches d'électrodes portant des couches d'orientation sur les faces intérieures des plaques de support,
◆ un angle d'incidence entre l'axe longitudinal des molécules à la surface des plaques de support et les plaques de support elles-mêmes allant d'environ 1 à 30 degrés, et un angle de torsion du mélange à cristaux liquides dans la cellule, de couche d'orientation à couche d'orientation, allant de 100 à 600 degrés selon le nombre,
le mélange à cristaux liquides nématique étant à base de :
a) un composant A qui contient un ou plusieurs composés de formule I: 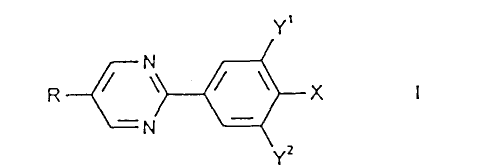 un ou plusieurs composés de formules II à IV : 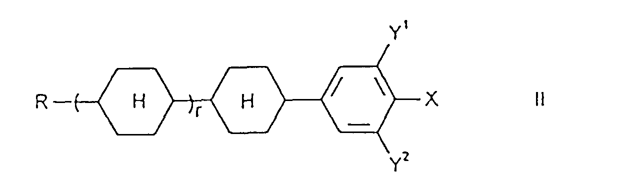 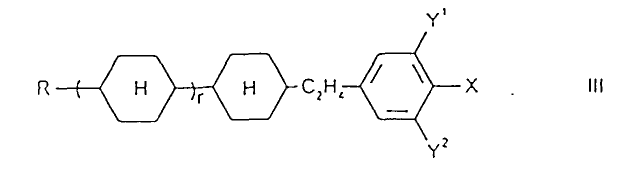 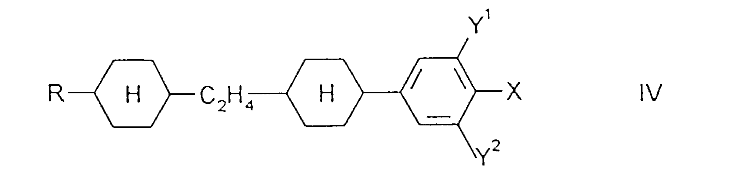 dans lesquelles les divers symboles ont les significations suivantes :
◆ R : un groupe alkyle, oxaalkyle, un groupe fluoralkyle à chaîne droite de formule -CₙH₂ₙF ou un groupe alcényle, contenant chacun jusqu'à 7 atomes de carbone,
◆ X : F, Cl, CF₃, CHF₂, OCF₃, OCHF₂, -OCF₂CF₂H ou O-C₂F₅,
◆ Y¹ et Y² représentent chacun, indépendamment l'un de l'autre, H ou F et
◆ r est égal à 0 ou 1,
b) 0 à 40 % en poids d'un composant à cristaux liquides B consistant en un ou plusieurs composés ayant une anisotropie diélectrique de -1,5 à +1,5, de formule générale IX, 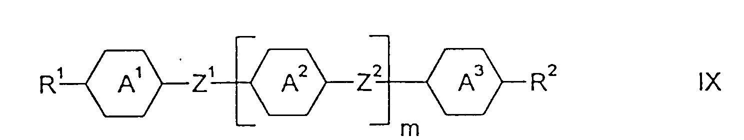 dans laquelle
◆ R¹ et R² représentent chacun, indépendamment l'un de l'autre, un groupe n-alkyle, n-alcoxy, n-oxaalkyle, un groupe fluoralkyle à chaîne droite de formule -CₙH₂ₙF ou un groupe n-alcényle contenant jusqu'à neuf atomes de carbone,
◆ A¹, A² et A³ représentent chacun, indépendamment les un des autres, un groupe 1,4-phénylène, 2- ou 3-fluoro-1,4-phénylène, trans-1,4-cyclohexylène ou 1,4-cyclohexénylène,
◆ Z¹ et Z² représentent chacun, indépendamment l'un de l'autre, -CH₂CH₂-, -C≡C- ou une liaison simple et
◆ m est égal à 0, 1 ou 2,
c) 0 à 20 % en poids d'un composant à cristaux liquides C consistant en un ou plusieurs composés ayant une anisotropie diélectrique inférieure à -1,5, et qui contient l'élément de structure 2,3-difluorophénylène, et
d) un composant D possédant l'activité optique, en quantité telle que le rapport entre l'épaisseur de couche (distance entre les plaques planes parallèles) et le pas naturel du mélange à cristaux liquides nématique chiral aille d'environ 0,2 à 1,7, plus spécialement d'environ 0,2 à 1,3,
et le mélange à cristaux liquides nématique présente un intervalle de phase nématique d'au moins 60°C, une viscosité ne dépassant pas 35 mPa.s et une anisotropie diélectrique d'au moins +1, les anisotropies diélectriques des composés et les paramètres concernant le mélange à cristaux liquides nématique se rapportant à une température de 20°C, caractérisé en ce que le mélange à cristaux liquides nématique contient de 0 à 5 % de composés à cristaux liquides portant des groupes cyano.

2. Affichage selon la revendication 1, caractérisé en ce que le composant A contient des composés de formules I, II et III dans lesquelles X représente F, et des composés de formules II et/ou III dans lesquelles X représente OCF₃.

3. Affichage selon au moins l'une des revendications 1 à 2, caractérisé en ce que X représente F, Cl, CF₃, -OCF₃, OCHF₂ ou -CHF₂.

4. Affichage selon au moins l'une des revendications 1 à 3, caractérisé en ce que le composant B contient un ou plusieurs composés choisis dans le groupe formé par les composés de formules IX1 à IX7 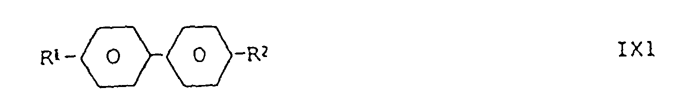 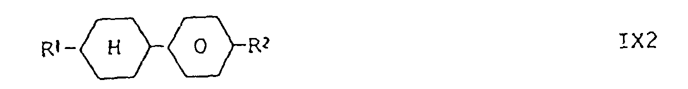 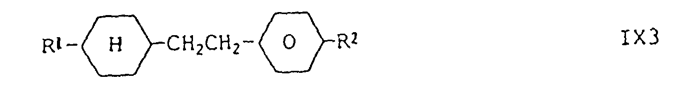 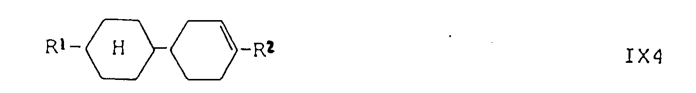 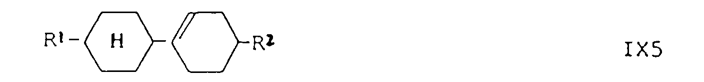 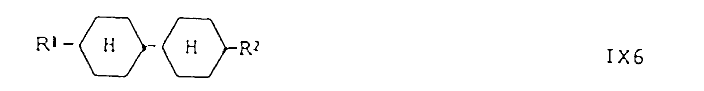 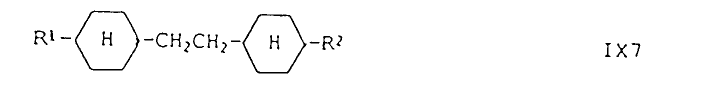 dans lesquelles R¹ et R² ont les significations indiquées dans la revendication 1.

5. Affichage selon la revendication 4, caractérisé en ce que le composant B contient en outre un ou plusieurs composés choisis parmi ceux qui répondent aux formules IX9 à IX22 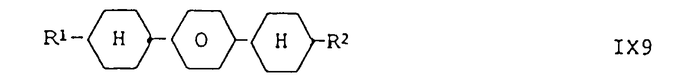 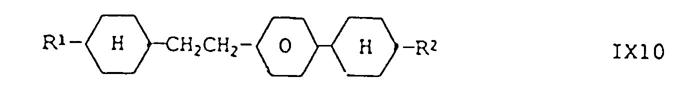 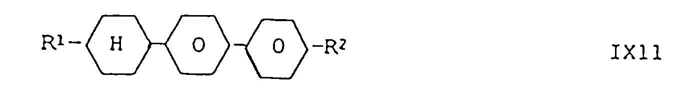 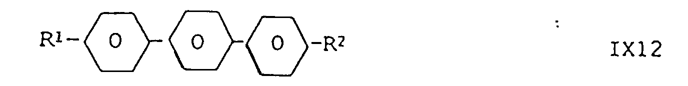 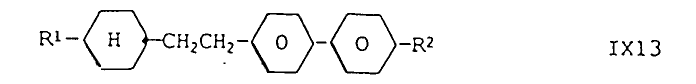 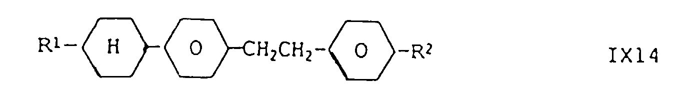 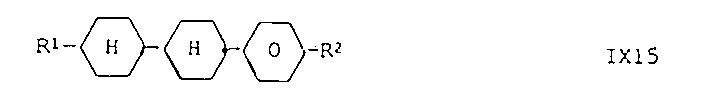 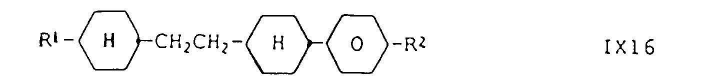 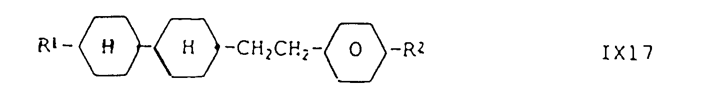 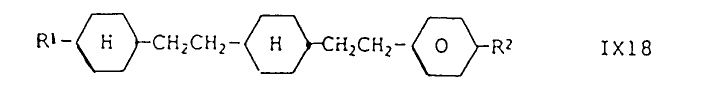 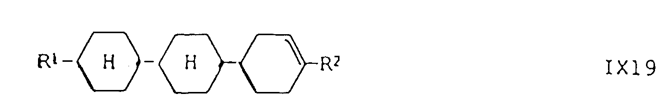 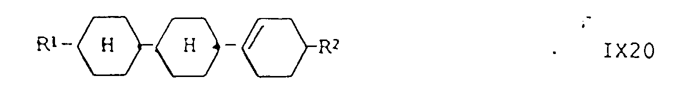 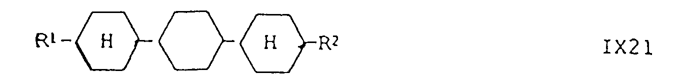 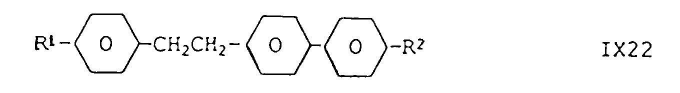 dans lesquelles R¹ et R² ont les significations indiquées dans la revendication 1, et les groupes 1,4-phénylène des formules IX9 à IX18 et IX22 pouvant porter chacun, indépendamment les uns des autres, un ou plusieurs substituants fluoro.

6. Affichage selon la revendication 4 ou 5, caractérisé en ce que le composant B contient en outre un ou plusieurs composés choisis parmi ceux qui répondent aux formules IX23 à IX27 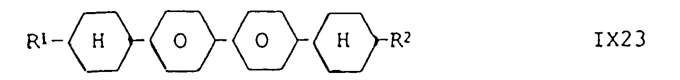 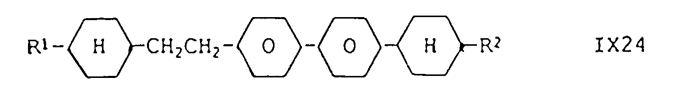 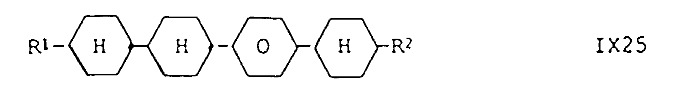 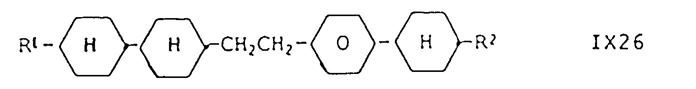 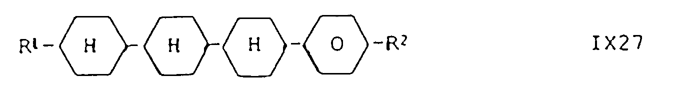 dans lesquelles R¹ et R² ont les significations indiquées dans la revendication 1 et les groupes 1,4-phénylène des formules IX23 à IX27 pouvant porter chacun, indépendamment les uns des autres, un ou plusieurs substituants fluoro.

7. Affichage selon au moins l'une des revendications 1 à 6, caractérisé en ce que le composant A contient un ou plusieurs composés de formule T3 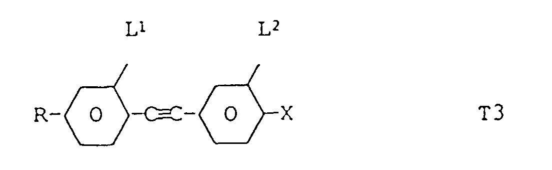 dans laquelle
◆ R représente -CₙH₂ₙ₊₁, -OCₙH₂ₙ₊₁, 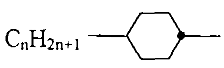 ou 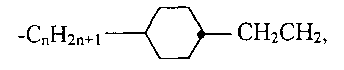
◆ n est un nombre entier allant de 1 à 15,
◆ L¹ et L² représentent chacun, indépendamment l'un de l'autre, H ou F et
◆ X représente F, Cl ou OCF₃.

8. Affichage selon au moins l'une des revendications 1 à 7, caractérisé en ce que le composant B contient un ou plusieurs composés choisis parmi ceux qui répondent aux formules XXV à XXVII 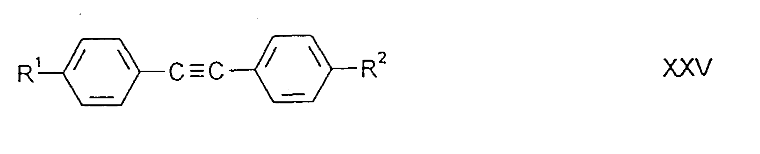 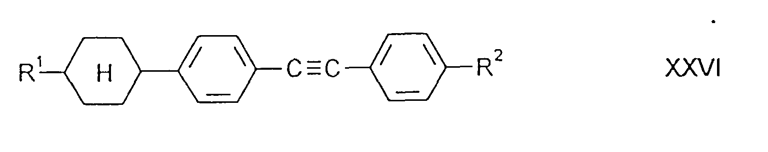 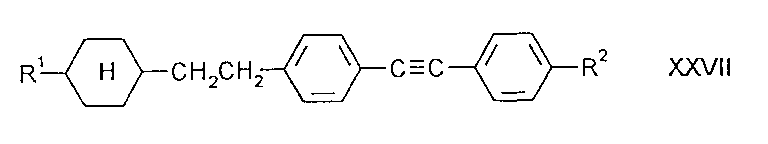 dans lesquelles
R¹ et R² ont les significations indiquées en référence à la formule IX.

9. Affichage selon au moins l'une des revendications 1 à 8, caractérisé en ce que le mélange à cristaux liquides nématique contient en outre un ou plusieurs composés choisis parmi ceux qui répondent aux formules générales V à VIII et X à XV : 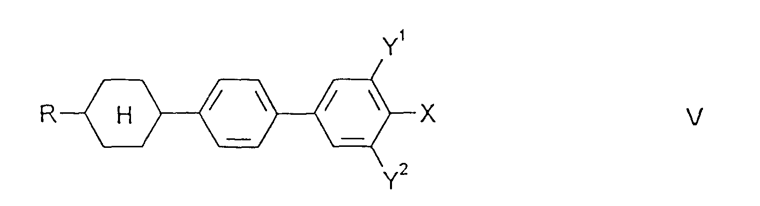 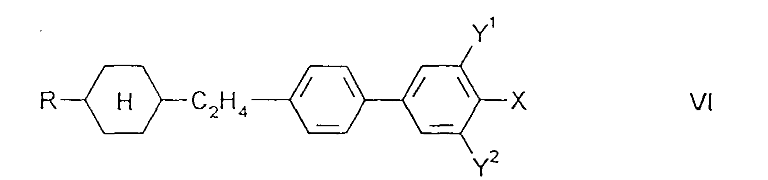 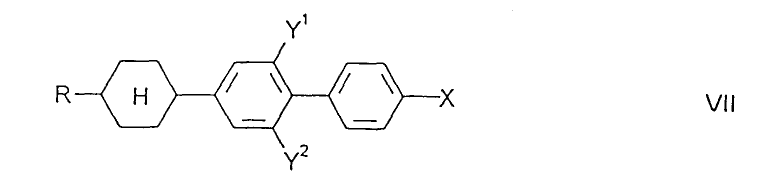 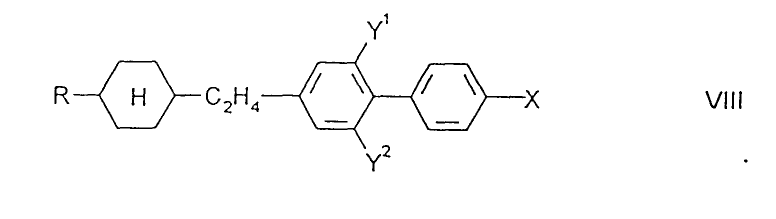 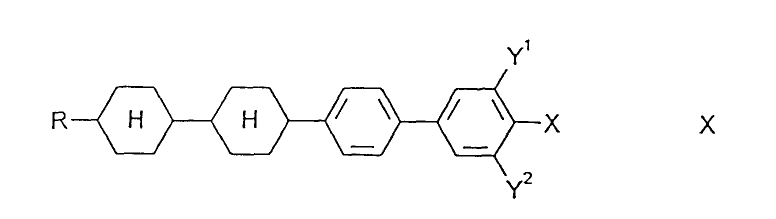 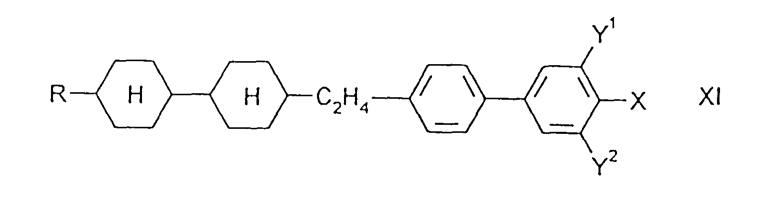 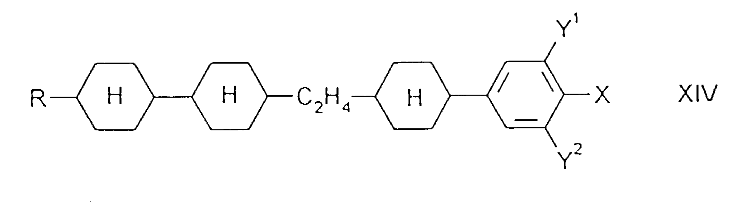 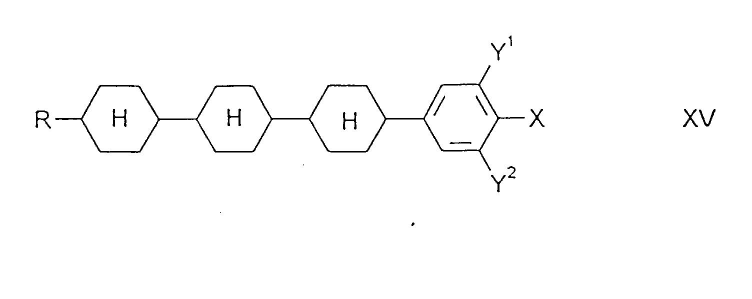 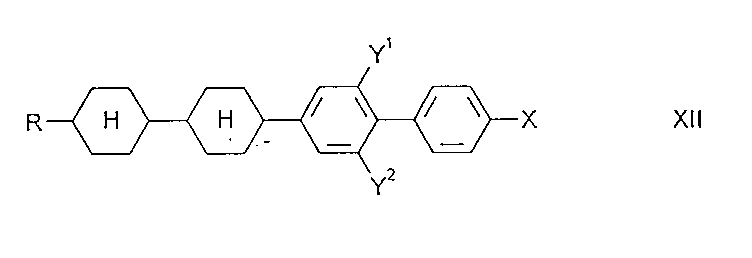 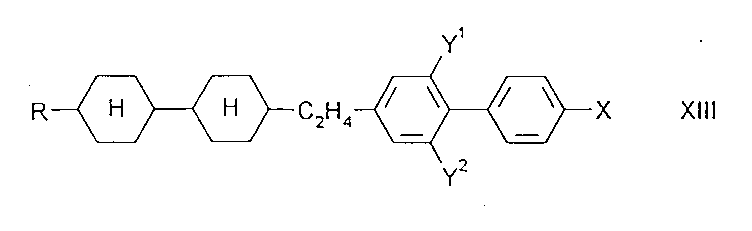 dans lesquelles R, X, Y¹ et Y² ont chacun, indépendamment les uns des autres, l'une des significations indiquées dans la revendication 1.

10. Affichage selon au moins l'une des revendications 1 à 9, caractérisé en ce que le mélange à cristaux liquides nématique contient en outre un ou plusieurs composés hétérocycliques polaires choisis parmi les suivants : 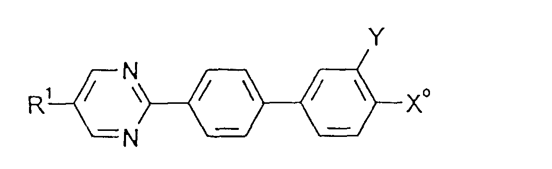 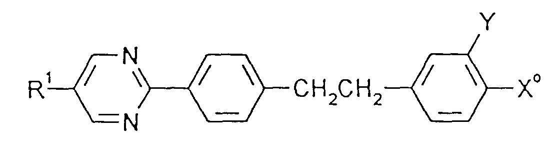 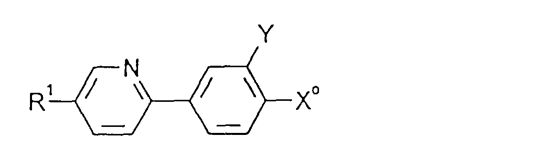 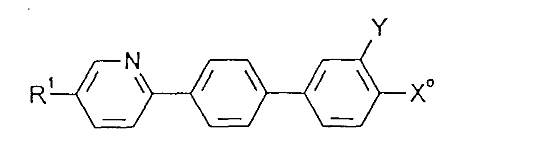 pour lesquels R¹ représente un groupe n-alkyle en C₁-C₇ ou (trans)-n-alcényle en C₃-C₇, X⁰ représente F, Cl ,CF₃, -OCF₃ ou OCHF₃ et Y représente H ou F.

11. Affichage selon au moins l'une des revendications 1 à 10, caractérisé en ce que le mélange à cristaux liquides nématique contient en outre un ou plusieurs composés de formule 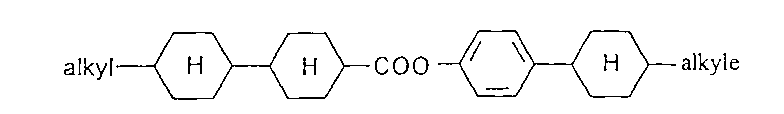 dans laquelle les groupes alkyle sont des groupes n-alkyle en C₁-C₈.

12. Affichage selon au moins l'une des revendications 1 à 11, caractérisé en ce que le mélange à cristaux liquides nématique contient en outre un ou plusieurs composés choisis parmi les suivants : 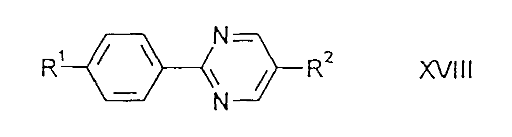 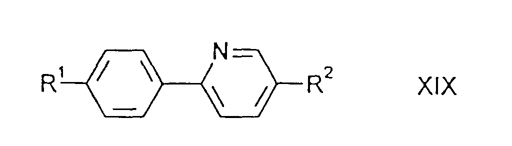 pour lesquels R¹ et R² ont les significations indiquées en référence à la formule IX.
